# EUROPEAN PATENT APPLICATION

(11) **EP 4 852 573 A1**
(43) Date of publication of application: **09.12.2026**
(21) Application number: 24922178.9
(22) Date of filing: 02.02.2024
(51) Int. Cl.: H04W 72/1268, H04W 4/30, H04W 52/02

(54) **DEVICE AND COMMUNICATION METHOD**

(71) Applicant: NTT DOCOMO, INC., Tokyo 100-6150 (JP)
(72) Inventor: YOSHIOKA, Shohei, Tokyo 100-6150 (JP); OKANO, Mayuko, Tokyo 100-6150 (JP); KUMAGAI, Shinya, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2024/003595
(87) International publication number: WO 2025/163919

(57) **Abstract**

This device, which has a lower complexity than a narrow band-Internet of things (NB-IoT) device, includes: a reception unit that receives information after the device wakes up; and a control unit that, when the information has been received, determines transmission of a signal on the basis of a prescribed probability.

## Description

### Technical Field

The present disclosure relates to a device and a communication method.

### Background Art

In New Radio (NR) (also referred to as "5G") that is a successor system of Long Term Evolution (LTE), a technology that satisfies a large-capacity system, a high data transmission speed, low latency, simultaneous connection of a large number of terminals, low cost, low power consumption, and the like as a requirement condition has been discussed (e.g., Non-Patent Literature (hereinafter, referred to as "NPL") 1).

Further, in Release 18 of 3GPP (registered trademark), Ambient Internet of Things (A-IoT) has been studied (e.g., NPL 2). In the ambient IoT, the target is a device having an extremely simple configuration for a low-end IoT application that operates with extremely low power consumption.

### Citation List

### Non-Patent Literature

NPL 1
   3GPP TS 38.300 V17.3.0 (2022-12)
NPL 2
   "Revised SID on Ambient IoT", RP-232404, 3GPP TSG RAN Meeting #101, September 2023
NPL 3
   3GPP TR 38.848 V1.0.0 (2023-09)
NPL 4
   3GPP TS 36.211 V16.7.0 (2021-09)
NPL 5
   "New SID: Study on solutions for Ambient IoT (Internet of Things) in NR", RP-234058, 3GPP TSG RAN Meeting #102, December 2023

### Summary of Invention

However, in the ambient IoT, study on an operation related to transmission of a signal is insufficient, and further study is required.

One aspect of the present disclosure is to provide a device and a communication method each capable of appropriately transmitting a signal.

### Solution to Problem

A device according to an aspect of the present disclosure has a lower complexity than a Narrow Band-Internet of Things (NB-IoT) device, and the device includes: a reception section that receives information after the device wakes up; and a control section that, when the information is received, determines transmission of a signal based on a predetermined probability.

### Brief Description of Drawings

[FIG. 1] FIG. 1 is a diagram illustrating a configuration example of a radio communication system according to an embodiment;
[FIG. 2] FIG. 2 is a diagram for describing Topology 1;
[FIG. 3] FIG. 3 is a diagram for describing Topology 2;
[FIG. 4] FIG. 4 is a diagram for describing Topology 3 with downlink (DL) assistance;
[FIG. 5] FIG. 5 is a diagram for describing Topology 3 with uplink (UL) assistance;
[FIG. 6] FIG. 6 is a diagram for describing Topology 4;
[FIG. 7] FIG. 7 is a diagram for describing backscattering transmission;
[FIG. 8] FIG. 8 is a diagram illustrating a communication flow of DT in Topology 1;
[FIG. 9] FIG. 9 is a diagram illustrating a communication flow of DO-DTT in Topology 1;
[FIG. 10] FIG. 10 is a diagram illustrating a communication flow of DT in Topology 2;
[FIG. 11] FIG. 11 is a diagram illustrating a communication flow of DO-DTT in Topology 2;
[FIG. 12] FIG. 12 is a diagram illustrating a communication flow of DO-DTT in Topology 1;
[FIG. 13] FIG. 13 is a diagram illustrating Proposal 1: Option 1a;
[FIG. 14] FIG. 14 is a diagram illustrating Proposal 1: Option 1b;
[FIG. 15] FIG. 15 is a diagram illustrating Proposal 1: Option 1b;
[FIG. 16] FIG. 16 is a diagram illustrating Proposal 1: Option 1b;
[FIG. 17] FIG. 17 is a diagram illustrating Proposal 1: Option 1b;
[FIG. 18] FIG. 18 is a diagram illustrating Proposal 1: Option 1b;
[FIG. 19] FIG. 19 is a diagram illustrating Proposal 1: Option 1b;
[FIG. 20] FIG. 20 is a diagram illustrating Proposal 1: Option 1b;
[FIG. 21] FIG. 21 is a diagram illustrating Proposal 1: Option 2a;
[FIG. 22] FIG. 22 is a diagram illustrating Proposal 1: Option 2a;
[FIG. 23] FIG. 23 is a diagram illustrating Proposal 1: Option 2a;
[FIG. 24] FIG. 24 is a diagram illustrating Proposal 1: Option 2a;
[FIG. 25] FIG. 25 is a diagram illustrating Proposal 1: Option 2a;
[FIG. 26] FIG. 26 is a diagram illustrating Proposal 1: Option 2a;
[FIG. 27] FIG. 27 is a diagram illustrating Proposal 1: Option 2a;
[FIG. 28] FIG. 28 is a diagram illustrating Proposal 1: Option 2b;
[FIG. 29] FIG. 29 is a diagram illustrating Proposal 1: Option 2b;
[FIG. 30] FIG. 30 is a diagram illustrating Proposal 1: Option 2b;
[FIG. 31] FIG. 31 is a diagram illustrating Proposal 1: Option 2b;
[FIG. 32] FIG. 32 is a diagram illustrating Proposal 1: Option 2b;
[FIG. 33] FIG. 33 is a diagram illustrating Proposal 1: Option 2b;
[FIG. 34] FIG. 34 is a diagram illustrating Proposal 1: Option 2b;
[FIG. 35] FIG. 35 is a diagram illustrating Proposal 2: Option 1a;
[FIG. 36] FIG. 36 is a diagram illustrating Proposal 2: Option 1b;
[FIG. 37] FIG. 37 is a diagram illustrating Proposal 2: Option 2a;
[FIG. 38] FIG. 38 is a diagram illustrating Proposal 2: Option 2b;
[FIG. 39] FIG. 39 is a diagram illustrating Proposal 3: Option 1;
[FIG. 40] FIG. 40 is a diagram illustrating Proposal 3: Option 2;
[FIG. 41] FIG. 41 is a diagram illustrating Proposal 3: Option 3;
[FIG. 42] FIG. 42 is a diagram illustrating Proposal 7: Option 1;
[FIG. 43] FIG. 43 is a diagram illustrating Proposal 7: Option 2;
[FIG. 44] FIG. 44 is a diagram illustrating Proposal 7: Option 3;
[FIG. 45] FIG. 45 is a diagram illustrating Proposal 7: Option 4;
[FIG. 46] FIG. 46 illustrates an example of Variation;
[FIG. 47] FIG. 47 is a block diagram illustrating an example of a configuration of a base station according to the embodiment;
[FIG. 48] FIG. 48 is a block diagram illustrating an example of a configuration of a device according to the embodiment;
[FIG. 49] FIG. 49 is a diagram illustrating an example of a hardware configuration of a base station and a device according to the embodiment; and
[FIG. 50] FIG. 50 is a diagram illustrating a configuration example of a vehicle.

### Description of Embodiments

Hereinafter, an embodiment according to an aspect of the present disclosure will be described in detail with reference to the accompanying drawings. Note that the embodiment to be described below is merely an example, and an embodiment to which the present disclosure is applied is not limited to the embodiment below.

Existing techniques are used as appropriate for operations of a radio communication system in an embodiment of the present disclosure. Note that the existing techniques include, for example, existing LTE, but are not limited to existing LTE. Further, the term "LTE" used in this specification has a broad meaning including LTE-Advanced and a system after LTE-Advanced (e.g., NR), unless otherwise specified.

Terms used in existing LTE, such as a synchronization signal (SS), a primary SS (PSS), a secondary SS (SSS), a physical broadcast channel (PBCH), a physical random access channel (PRACH), a physical downlink control channel (PDCCH), a physical downlink shared channel (PDSCH), a physical uplink control channel (PUCCH), and a physical uplink shared channel (PUSCH), are used in an embodiment of the present disclosure described below. This is for the sake of convenience in description, and the same signals, functions, and the like may be called by other names. Further, the above terms in NR correspond to NR-SS, NR-PSS, NR-SSS, NR-PBCH, NR-PRACH, and the like. Note that, even though the signal is used in NR, it is not necessarily explicitly referred to as "NR-."

Further, in the embodiment of the present disclosure, a duplex system may be a Time Division Duplex (TDD) system, a Frequency Division Duplex (FDD) system, or other systems (e.g., Flexible Duplex or the like).

Furthermore, in an embodiment of the present disclosure, the term "configured" with respect to a radio parameter or the like may refer to a predetermined value being pre-configured, or it may refer to a radio parameter indicated from a base station or a terminal including a device being configured.

### <System Configuration>

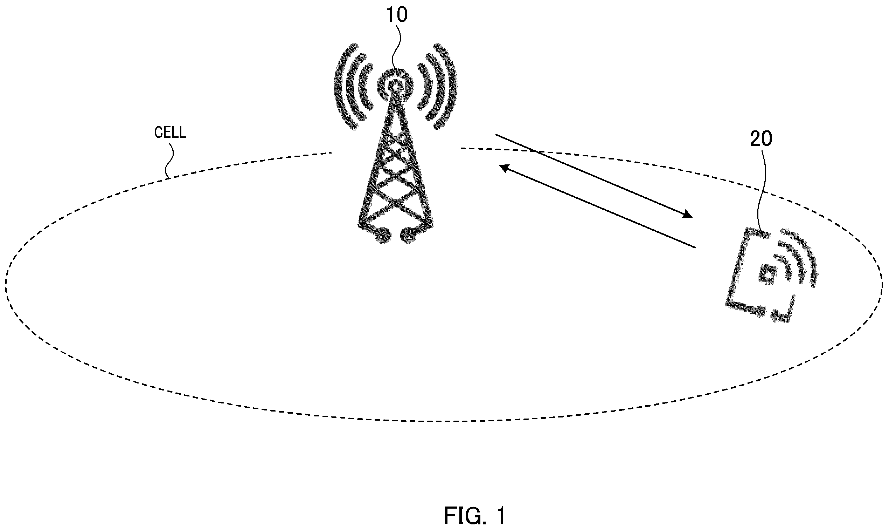

FIG. 1 is a diagram illustrating a configuration example of a radio communication system according to an embodiment. As illustrated in FIG. 1, the radio communication system includes base station 10 and device 20. Although FIG. 1 illustrates one base station 10 and one device 20, this is an example, and there may be a plurality of each. Device 20 may be an Ambient-IoT device.

Base station 10 is a communication apparatus that provides one or more cells and performs radio communication with device 20. Physical resources of the radio signal are defined in a time domain and a frequency domain. The time domain may be defined by the number of orthogonal frequency division multiplexing (OFDM) symbols. The frequency domain may be defined by the number of subcarriers or the number of resource blocks.

Base station 10 transmits a synchronization signal and system information to device 20. Base station 10 transmits a control signal and data to device 20 in downlink (DL). Base station 10 receives a control signal and data from device 20 in uplink (UL).

As will be described later, the radio communication system may include an intermediate node and/or an assisting node (see <Device Type and Topology> below). Hereinafter, "and/or" may be simply described as "/."

### <Ambient IoT>

In Rel-18 (Release-18), a study on Ambient-IoT (hereinafter, may be referred to as "A-IoT") that is even lower-end than existing narrow band IoT (NB-IoT) (e.g., see section 10 of NPL 4) has been approved (e.g., see NPL 2). In A-IoT, an ultra-low power consumption and ultra-low complexity device is a target.

In A-IoT, for example, the following introduction scenarios and characteristics may be studied for related use cases.
- Indoor or outdoor environment
- Base station type, for example, macro/micro/pico cell-based deployment
- Topology related to connectivity, for example, which node among a base station, a terminal (UE), a relay, a repeater, and the like communicates with the A-IoT device
- Whether a duplex system is TDD or FDD, and whether a frequency band is a licensed band or an unlicensed band
- Coexistence with UE and network equipment in frequency band for the existing 3GPP technology
- Assumption of traffic of outgoing call from device and incoming call to device

For example, the following RAN design targets can be established based on the above-described introduction scenarios and characteristics.
- Power consumption
- Complexity
- Coverage
- Data rate
- Positioning accuracy

Based on the introduction scenarios suitable for the related use case, the feasibility of satisfying the design target is compared and evaluated, and a function to be supported is specified.

### <Device Type and Topology>

Based on the results of the study item, TR 38.848 (NPL 3) has been approved. In TR 38.848, A-IoT devices of the following categories are studied.

Device A: Device A has no power storage (energy storage) and no function of independent signal generation and signal amplification. Device A performs backscattering transmission.

Device B: Device B has power storage and has no function of independent signal generation. Device B performs backscattering transmission. Device B amplifies the reflected signal by using stored power.

Device C: Device C has power storage and has a function of independent signal generation. That is, device C has an active RF component for transmission.

It is assumed that the complexity of device A is about radio frequency identification (RFID).

In TR 38.848, Topologies 1 to 4 below are defined in an A-IoT network.

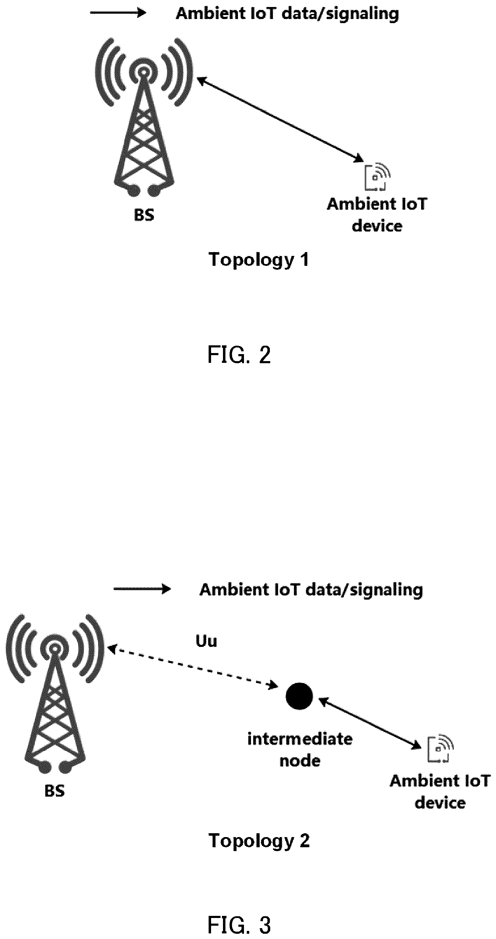

FIG. 2 is a diagram illustrating Topology 1. As illustrated in FIG. 2, Topology 1 is a configuration in which a base station (BS) and an A-IoT device communicate with each other. The A-IoT device directly executes bidirectional communication with the base station.

FIG. 3 is a diagram illustrating Topology 2. As illustrated in FIG. 3, Topology 2 is a configuration in which the base station and the A-IoT device communicate with each other via the intermediate node. The A-IoT device executes bidirectional communication with an intermediate node disposed between the base station and the A-IoT device. The intermediate node may be, for example, a relay, an integrated access and backhaul (IAB) node, UE, a repeater, or the like.

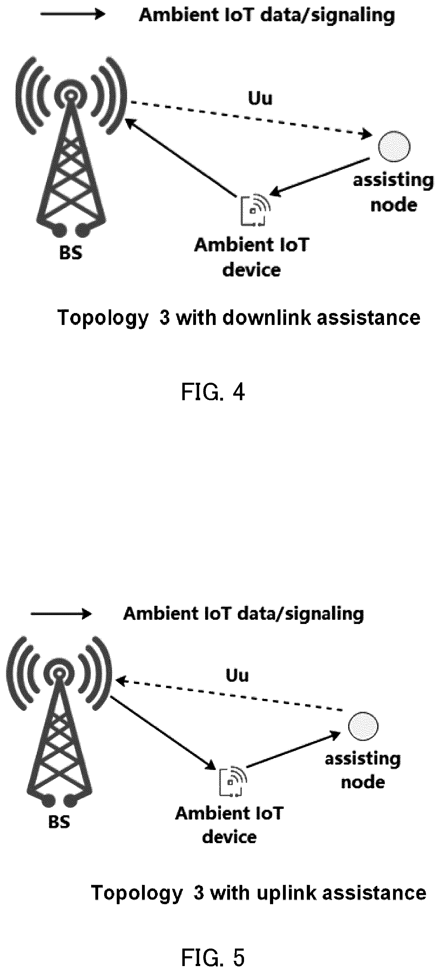

FIG. 4 is a diagram illustrating Topology 3 with DL assistance. As illustrated in FIG. 4, Topology 3 is a configuration including communication between the base station and an assisting node, communication between the assisting node and the A-IoT device, and communication between the A-IoT device and the base station.

The assisting node assists in DL communication. For example, as illustrated in FIG. 4, the assisting node receives a DL signal from the base station and transmits the DL signal to the A-IoT device. As for the UL signal, the A-IoT device directly transmits it to the base station.

FIG. 5 is a diagram illustrating Topology 3 with UL assistance. As illustrated in FIG. 5, Topology 3 is a configuration including communication between the base station and the assisting node, communication between the assisting node and the A-IoT device, and communication between the A-IoT device and the base station.

The assisting node assists in UL communication. For example, as illustrated in FIG. 5, the assisting node receives the UL signal from the A-IoT device and transmits the UL signal to the base station. As for the DL signal, the A-IoT device directly receives it from the base station.

The assisting node illustrated in FIGS. 4 and 5 may transmit the carrier wave for causing the A-IoT device to generate backscattering. The assisting node may be, for example, a relay, an IAB node, UE, a repeater, or the like.

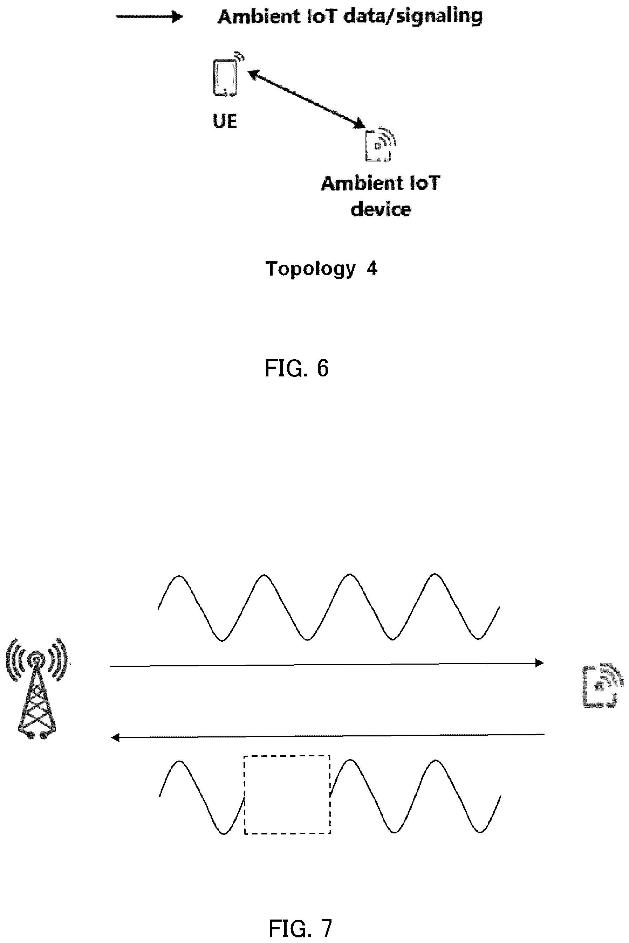

FIG. 6 is a diagram illustrating Topology 4. Topology 4 is a configuration in which UE and the A-IoT device communicate with each other. The A-IoT device executes bidirectional communication with the UE. Topology 4 can also be regarded as sidelink (SL) communication.

In Topologies 1 to 4 described above, a carrier wave may be provided to the A-IoT device from another node inside or outside the topologies (see section 4.2.1 of NPL 3).

### <Backscattering Transmission>

The base station, the intermediate node, the assisting node, and another node transmit the RF signal to the A-IoT device. The A-IoT device is activated and obtains power from an RF operating field from the base station, the intermediate node, the assisting node, and another node via inductive coupling.

The A-IoT device modulates, in a backscattering manner, the RF signal received from the base station, the intermediate node, the assisting node, and another node, by switching a reflection coefficient of an antenna of its own device, and transmits information to the base station, the intermediate node, the assisting node, and another node.

FIG. 7 is a diagram illustrating backscattering transmission. FIG. 7 illustrates an example in which the A-IoT device performs On-Off keying to transmit information. A region surrounded by a broken line illustrated in FIG. 7 indicates an OFF interval and may correspond to "0" of the information (bit). A signal of a sine wave may correspond to "1" of the information.

Hereinafter, the network may include a base station, an assisting node, an intermediate node, and a terminal (UE of Topology 4). Hereinafter, the base station, the assisting node, the intermediate node, the relay, and the terminal may be referred to as a network node. The ambient IoT may be referred to as A-IoT. The A-IoT device may be referred to as an A-IoT UE.

### <Rel-19 Study Item Description (SID)>

In the SID of Rel-19, a solution that is necessary and feasible for A-IoT has been studied (section 4.1 of NPL 5). The studied solution includes, for example, determinations of which functions, procedures, and the like are necessary and which functions, procedures, and the like are not necessary.

In addition, several matters are discussed under the leadership of RAN 1 for DL and UL of A-IoT. The matters to be discussed include multi-access, scheduling, and timing relationship for DL and UL in A-IoT. In the discussion of scheduling and timing relationship, the following 1. Traffic Flow, 2. Device Assumption, and 3. Topology can be studied.

### 1. Traffic Flow

The following DT and DO-DTT are studied as traffic flows of A-IoT.

### - Device Terminated (DT)

As traffic, there is transmission (DL) to the A-IoT UE, and there is no transmission (UL) from the A-IoT UE. In other words, there is information to be transmitted to the A-IoT UE, and there is no information to be transmitted from the A-IoT UE. DT corresponds to, for example, a command type in which an instruction such as an order or a command to the A-IoT UE is present.

### - Device Originated-Device Terminated Triggered (DO-DTT)

As traffic, there is a trigger from the network (NW), and there is transmission (UL) from the A-IoT UE. In other words, as traffic, there is information to be transmitted from the A-IoT UE. DO-DTT corresponds to, for example, a sensor information report type in which the A-IoT UE transmits the sensor information collected.

In the present disclosure, the transmission of information corresponds to the transmission of a signal including information or the transmission of a signal. In addition, in the present disclosure, the transmission to a certain device X corresponds to the transmission of a signal (or information) to device X. In addition, the transmission from a certain device X and the transmission of a certain device X correspond to the transmission of a signal (or information) by device X. In addition, the reception from a certain device X corresponds to the reception of a signal (or information) transmitted by device X. In addition, the reception of a certain device X corresponds to the reception of a signal (or information) by device X.

### 2. Device Assumption

In the A-IoT UE, the following transmission (TX) and frequency range (FR) 1-FDD are assumed.

### - TX

TX is UL transmission of backscattering without an amplifier (amplification) or a general UL transmission with an amplifier. Alternatively, UL transmission of backscattering with an amplifier may be executed.

### - FR1-FDD

FR1-FDD is applied to the A-IoT UE. That is, the A-IoT UE can switch the carrier frequency between the DL carrier and the UL carrier. Note that the present disclosure is not limited to FR1-FDD, and may be applied to TDD or may be applied to FR2 or FR3.

Note that the frequency band of each FR is, for example, as follows.
- FR1: 410 MHz to 7.125 GHz
- FR2: 24.25 GHz to 52.6 GHz
- FR3: 7.125 GHz to 24.25 GHz

In FR1, a sub-carrier spacing (SCS) of 15 kHz, 30 kHz, or 60 kHz is used, and a bandwidth (BW) of 5 to 100 MHz may be used. FR2 has a higher frequency than FR1, and uses an SCS of 60 kHz or 120 kHz (240 kHz may be included), and may use a bandwidth (BW) of 50 to 400 MHz.

### 3. Topology

Among the topologies illustrated in FIGS. 2 to 6, Topology 1 and Topology 2 are focused on.

In Topology 1, UL and/or DL communication is performed between the base station and the A-IoT UE without passing through an intermediate node. Note that the base station in the case of Topology 1 may support a microcell.

In Topology 2, communication is performed between the base station and the A-IoT UE via an intermediate node. The A-IoT UE performs bidirectional communication with the intermediate node disposed between the base station and the A-IoT UE. Note that the base station in the case of Topology 2 may support a macrocell. Further, the case of Topology 2 may be applied to an indoor case. Hereinafter, the intermediate node may be referred to as intermediate UE (int. UE).

### <Communication Flow>

The signal design for the A-IoT UE may be designed to be common between Topology 1 and Topology 2. Since the signal design for the A-IoT UE is common, the communication flows of DT and DO-DTT in Topology 1 and Topology 2 can be studied. The following four communication flows may be assumed as the communication flows of DT and DO-DTT in Topology 1 and Topology 2.

Note that, as described in the following four communication flows 1. to 4., the A-IoT UE wakes up in Step 1 and receives information in Step 2. The information received by the A-IoT UE may be read as a signal.

Further, as described in the following communication flows 2. and 4., the A-IoT UE transmits a signal in Step 3. The signal transmitted by the A-IoT UE may be read as information.

### 1. Communication Flow of DT in Topology 1

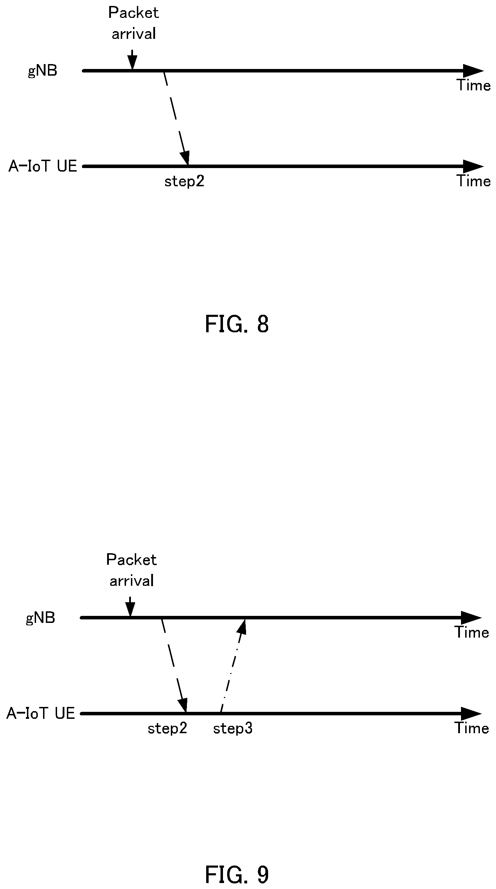

FIG. 8 is a diagram illustrating a communication flow of DT in Topology 1. FIG. 8 illustrates a flow of signals between the base station and the A-IoT UE. Note that, since the communication flow illustrated in FIG. 8 is a communication flow of DT, there is information transmission from the base station to the A-IoT UE, but there is no information transmission from the A-IoT UE to the base station.

In the communication flow of DT in Topology 1, the following two steps are assumed.
- Step 1: The A-IoT UE wakes up by a signal such as a carrier waveform transmitted from the base station (Step 1 is not illustrated). The carrier waveform may be replaced with a carrier wave.
- Step 2: The A-IoT UE receives information from the base station.

Note that Step 1 is started, for example, when a packet is generated in an application layer of the base station (corresponding to "Packet arrival" indicated in FIG. 8) (the same applies to Step 1 described with reference to FIGS. 9, 10, and 11).

The A-IoT UE may wake up by a signal other than the carrier waveform signal transmitted from the base station (e.g., RF signal (radio frequency signal)). Here, the signal other than the carrier waveform signal transmitted from the base station may correspond to an energy source that supplies energy to the A-IoT UE.

The A-IoT UE may wake up by a signal (e.g., RF signal) transmitted from a source other than the base station. Here, the signal transmitted from a source other than the base station may correspond to an energy source that supplies energy to the A-IoT UE. The carrier waveform may be replaced with a carrier wave.

### 2. Communication Flow of DO-DTT in Topology 1

FIG. 9 is a diagram illustrating a communication flow of DO-DTT in Topology 1. FIG. 9 illustrates a flow of signals between the base station and the A-IoT UE. Note that, since the communication flow illustrated in FIG. 9 is a communication flow of DO-DTT, there are information transmission from the base station to the A-IoT UE and information transmission from the A-IoT UE to the base station.

In the communication flow of DO-DTT in Topology 1, the following three steps are assumed.
- Step 1: The A-IoT UE wakes up by a signal such as a carrier waveform transmitted from the base station (Step 1 is not illustrated).
- Step 2: The A-IoT UE receives information from the base station.
- Step 3: The A-IoT UE transmits a signal to the base station.

### 3. Communication Flow of DT in Topology 2

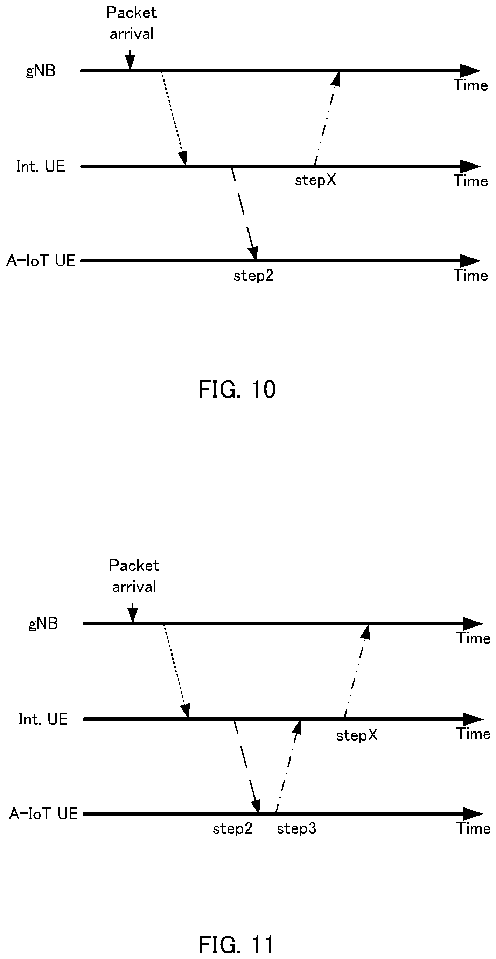

FIG. 10 is a diagram illustrating a communication flow of DT in Topology 2. FIG. 10 illustrates a flow of signals between the base station, the int. UE, and the A-IoT UE. Note that, since the communication flow illustrated in FIG. 10 is a communication flow of DT, there is information transmission to the A-IoT UE, but there is no information transmission from the A-IoT UE.

In the communication flow of DT in Topology 2, the following four steps are assumed.
- Step 0: The int. UE receives a trigger for transmitting a signal such as a carrier waveform to the A-IoT UE from the base station, and transmits the signal to the A-IoT UE based on the trigger (Step 0 is not illustrated).
- Step 1: The A-IoT UE wakes up by a signal such as a carrier waveform transmitted from the int. UE (Step 1 is not illustrated).
- Step 2: The A-IoT UE receives information from the base station via the int. UE.
- Step X: The int. UE transmits a signal to the base station.

### 4. Communication Flow of DO-DTT in Topology 2

FIG. 11 is a diagram illustrating a communication flow of DO-DTT in Topology 2. FIG. 11 illustrates a flow of signals between the base station, the int. UE, and the A-IoT UE. Note that, since the communication flow illustrated in FIG. 11 is a communication flow of DO-DTT, there are information transmission to the A-IoT UE and information transmission from the A-IoT UE.

In the communication flow of DO-DTT in Topology 2, the following five steps of communication flow are assumed.
- Step 0: The int. UE receives a trigger for transmitting a signal such as a carrier waveform to the A-IoT UE from the base station, and transmits the signal to the A-IoT UE based on the trigger (Step 0 is not illustrated).
- Step 1: The A-IoT UE wakes up by a signal such as a carrier waveform transmitted from the int. UE (Step 1 is not illustrated).
- Step 2: The A-IoT UE receives information from the base station via the int. UE.
- Step 3: The A-IoT UE transmits a signal to the int. UE.
- Step X: The int. UE transmits a signal to the base station.

### - Communication Flow of DO-DTT in Topology 1

In the communication flow of DO-DTT, the following communication flow may be assumed.

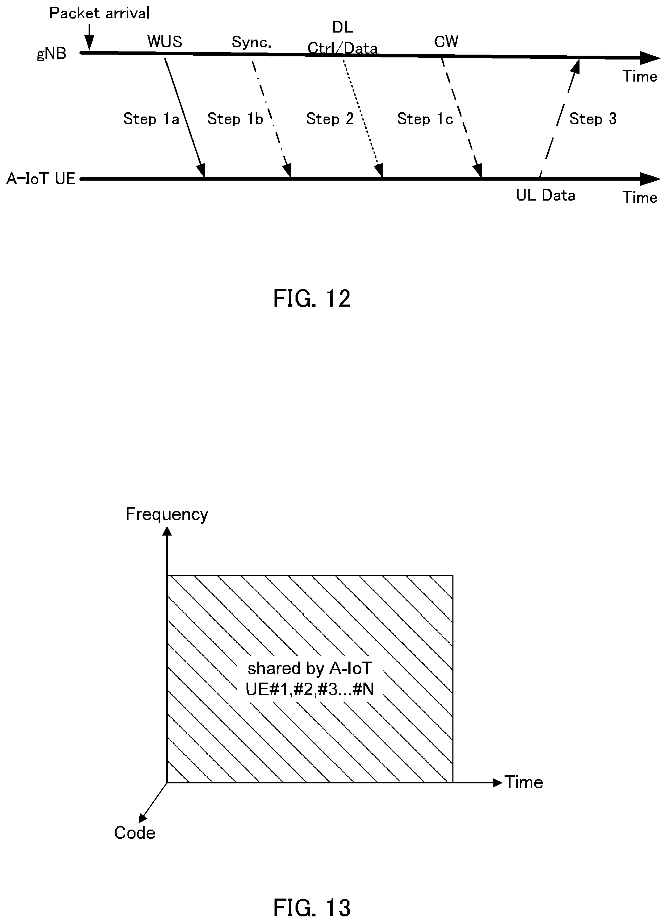

FIG. 12 is a diagram illustrating a communication flow of DO-DTT in Topology 1. FIG. 12 illustrates a flow of signals between the base station and the A-IoT UE. Note that, since the communication flow illustrated in FIG. 12 is a communication flow of DO-DTT, there are information transmission from the base station to the A-IoT UE and information transmission from the A-IoT UE to the base station.

In the communication flow of DO-DTT in Topology 1, the following steps are assumed.
- Step 1a: The A-IoT UE receives a signal/wake-up signal of the energy source.
- Step 1b: The A-IoT UE receives a signal for synchronization.
- Step 2: The A-IoT UE receives a signal (DL control/DL data/DL control & DL data) for data RX from the network.
- Step 1c: The A-IoT UE receives an unmodulated carrier wave for backscatter from the network.
- Step 3: The A-IoT UE transmits a signal for data TX to the network.

Note that some steps may be combined into one step. Some steps may be skipped.

In FIG. 12, the communication flow of DO-DTT in Topology 1 has been described, and in the communication flow of DO-DTT in Topology 2 as well, the flows of Steps 1a, 1b, and 1c are added similarly.

### <Analysis>

Considering a use case such as inventory, it is assumed to be effective that the information transmitted in Step 2 is transmitted to a group of A-IoT UEs. Note that, regarding the group of A-IoT UEs, the base station may or need not recognize the A-IoT UEs belonging to the group. For example, it is assumed to be effective that at least a part of the signal transmitted in Step 2 is transmitted by broadcast or multicast (groupcast).

However, the operation in a case where information is transmitted to a group of A-IoT UEs is not sufficiently studied in 3GPP, and the A-IoT UE is possibly incapable of appropriately transmitting a signal.

For example, in a use case such as inventory, the network such as a base station/int. UE may provide resource information such as a time domain resource, a frequency domain resource, and a code domain resource to a plurality of A-IoT UEs, and may instruct the A-IoT UEs to transmit a signal using the provided resource. However, the operation of providing and deriving resource information for a transmission signal in Step 3 is not sufficiently studied, and thus the A-IoT UEs are possibly incapable of appropriately transmitting a signal.

Then, in the present disclosure, in Proposals 1 to 8, a technique is provided in which the A-IoT UE can appropriately transmit a signal.

Note that, in the following proposals, a combination of Step 1b and Step 2 in the communication flow of DO-DTT may be regarded as Step 2. A combination of Step 1a, Step 1b, and Step 2 in the communication flow of DO-DTT may be regarded as Step 2. In the communication flow of DO-DTT, when Step 2 is skipped, Step 1b may be regarded as Step 2. In the communication flow of DO-DTT, when Step 2 is skipped, Step 1a and Step 1b may be regarded as Step 2.

Note that the phrase "may be regarded as Step 2" may mean "Step 2 may be replaced," and for example, the phrase "a combination of Step 1b and Step 2 may be regarded as Step 2." may mean "Step 2 may be replaced with a combination of Step 1b and Step 2." Further, the following proposals may be applied to the communication flow of DT. For example, a case is assumed in which the A-IoT UE executes any of the transmissions in a communication flow of DT.

The time domain resource, the frequency domain resource, and the code domain resource may be referred to as a time resource, a frequency resource, and a code resource, respectively. The information indicated (notified) by physical layer signaling may be indicated by, for example, Downlink Control Information (DCI). The information indicated by higher layer signaling may be indicated by, for example, Radio Resource Control (RRC).

### <Proposal 1>

In Proposal 1, a technique for allocating resources for transmission signals to a plurality of A-IoT UEs is proposed.

In the communication flow of DO-DTT in Topology 1 and Topology 2, the A-IoT UE receives information from the network (base station/int. UE) (Step 2) and transmits a signal to the network (Step 3). The information received in Step 2 triggers the transmission in Step 3. Note that, in the present disclosure, the base station and the int. UE may be replaced with each other.

Regarding the resources such as the time domain resource/frequency domain resource/code domain resource of the signal in Step 3, the following Options 1a, 1b, 2a, and 2b are proposed.

### <Proposal 1: Option 1a>

One time/frequency/code domain resource is provided (allocated) to one group of A-IoT UEs.

FIG. 13 is a diagram illustrating Proposal 1: Option 1a. As illustrated in FIG. 13, one time/frequency/code domain resource is provided to one group of A-IoT UEs. For example, one resource is shared by a plurality (one group) of A-IoT UEs of A-IoT UEs #1, #2, ..., and #N. Therefore, the resource is used by the group of A-IoT UEs in a contention-based manner.

In the case of <Proposal 1: Option 1a>, the information (resource information) in Step 2 may be broadcast to any A-IoT UE or may be multicast to the group of A-IoT UEs.

### <Proposal 1: Option 1b>

One time/frequency/code domain resource is provided to one A-IoT UE. In other words, an individual resource is provided to each of the plurality of A-IoT UEs. Note that one resource may be allocated to an A-IoT UE by individual signaling for the A-IoT UE.

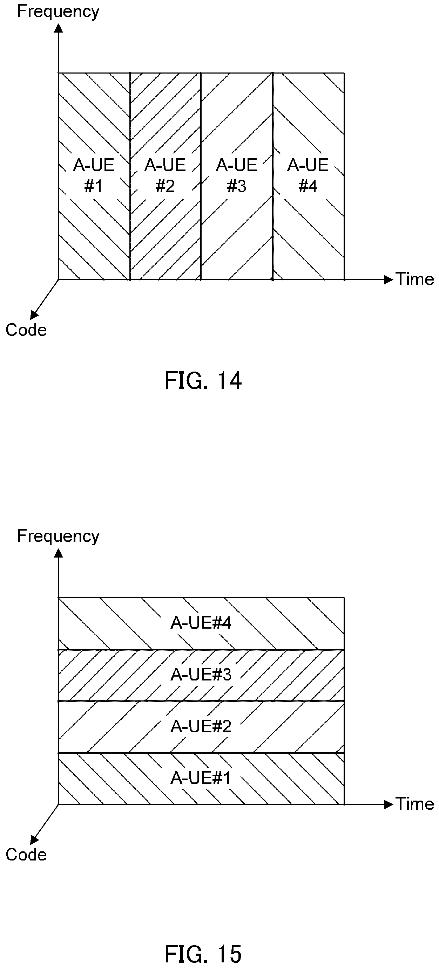

FIGS. 14 to 20 are diagrams illustrating Proposal 1: Option 1b. As illustrated in FIGS. 14 to 20, a plurality of time/frequency/code domain resources are respectively provided to the plurality (one group) of A-IoT UEs.

For example, in FIG. 14, one of the four resources is provided to A-IoT UE#1 among the four A-IoT UEs. One of the four resources is provided to A-IoT UE#2 among the four A-IoT UEs. One of the four resources is provided to A-IoT UE#3 among the four A-IoT UEs. One of the four resources is provided to A-IoT UE#4 among the four A-IoT UEs.

The plurality of A-IoT UEs use the provided resources for signal transmission in Step 3. From a viewpoint of a system (network), different resources are used by different A-IoT UEs in a contention-free manner.

The plurality of A-IoT UEs may derive different resources based on, for example, different A-IoT UE-specific parameters that are pre-configured. The derivation may be read as acquisition, selection, or determination. Further, derivation, acquisition, selection, and determination may be replaced with each other.

The information on the resource may be individually unicast to each of the plurality of A-IoT UEs in Step 2, for example. For example, the information on the resource may be individually unicast to each of the plurality of A-IoT UEs in the DL control information in Step 2. Note that information other than the DL control information in Step 2 may be received by broadcast or multicast.

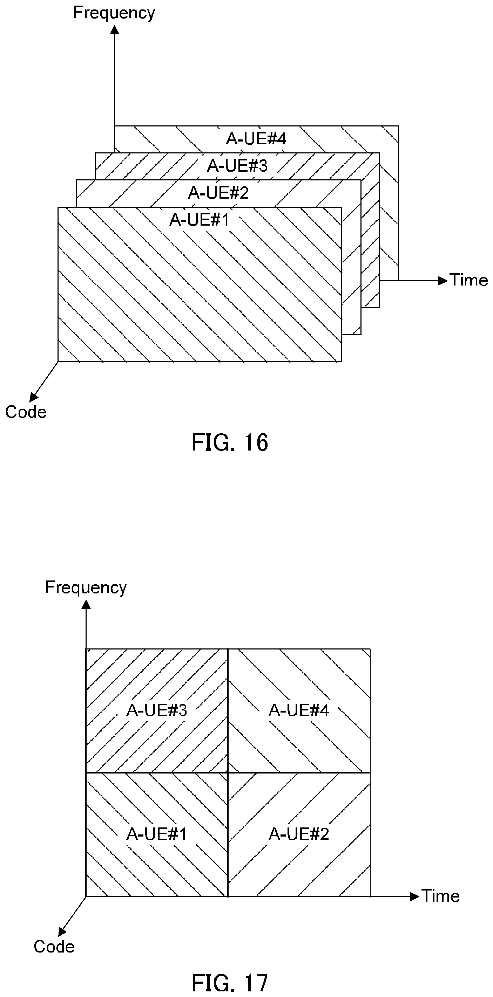

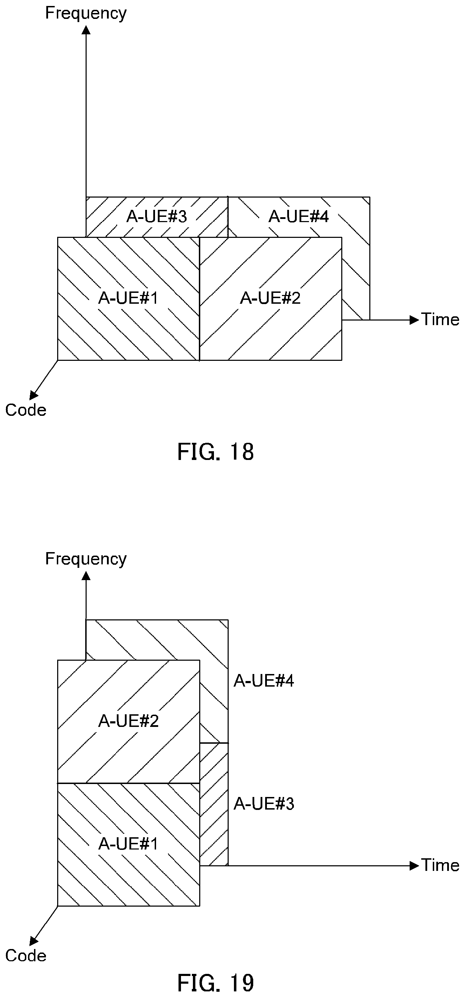

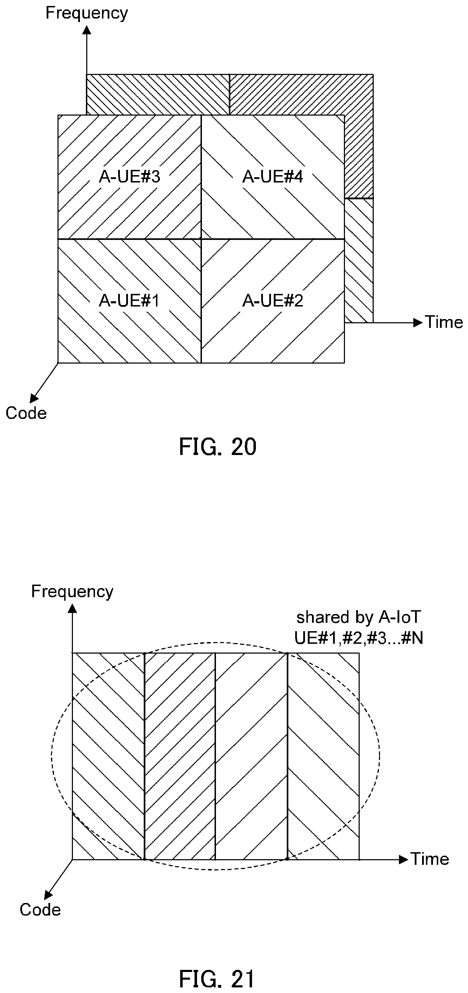

Note that FIG. 14 illustrates an example in which resources of different A-IoT UEs are time division multiplexed (TDM). FIG. 15 illustrates an example in which resources of different A-IoT UEs are frequency division multiplexed (FDM). FIG. 16 illustrates an example in which resources of different A-IoT UEs are code division multiplexed (CDM). FIG. 17 illustrates an example in which resources of different A-IoT UEs are TDM and FDM. FIG. 18 illustrates an example in which resources of different A-IoT UEs are TDM and CDM. FIG. 19 illustrates an example in which resources of different A-IoT UEs are FDM and CDM. FIG. 20 illustrates an example in which resources of different A-IoT UEs are TDM, FDM, and CDM.

### <Proposal 1: Option 2a>

A plurality of time/frequency/code domain resources are provided to one group of A-IoT UEs. The plurality of resources are allocated to the plurality of A-IoT UEs in a contention-based manner.

For example, in <Proposal 1: Option 2a>, the number of resources allocated to the A-IoT UEs is less than the number of A-IoT UEs. For example, 10 resources are allocated to 100 A-IoT UEs. Thus, in <Proposal 1: Option 2a>, the plurality of resources are allocated to the plurality of A-IoT UEs in a contention-based manner.

FIGS. 21 to 27 are diagrams illustrating Proposal 1: Option 2a. As illustrated in FIGS. 21 to 27, a plurality of time/frequency/code domain resources are provided to a plurality (one group) of A-IoT UEs.

For example, in FIG. 21, four resources are provided to N (N > 4) A-IoT UEs #1, #2, #3, ..., and #N. In other words, the four resources are shared by the N A-IoT UEs #1, #2, #3, ..., and #N. Therefore, the four resources are allocated to the N A-IoT UEs #1, #2, #3, ..., and #N in a contention-based manner.

The A-IoT UE may randomly select and use one resource for transmission.

The A-IoT UE may select one resource to be used for transmission, based on at least one of a defined rule, A-IoT UE-specific/common parameters indicated (provided) by the network, and/or parameters defined in the A-IoT UE such as an ID (identity) of the A-IoT UE.

The information on the plurality of resources may be broadcast or multicast to the plurality of A-IoT UEs in Step 2, for example.

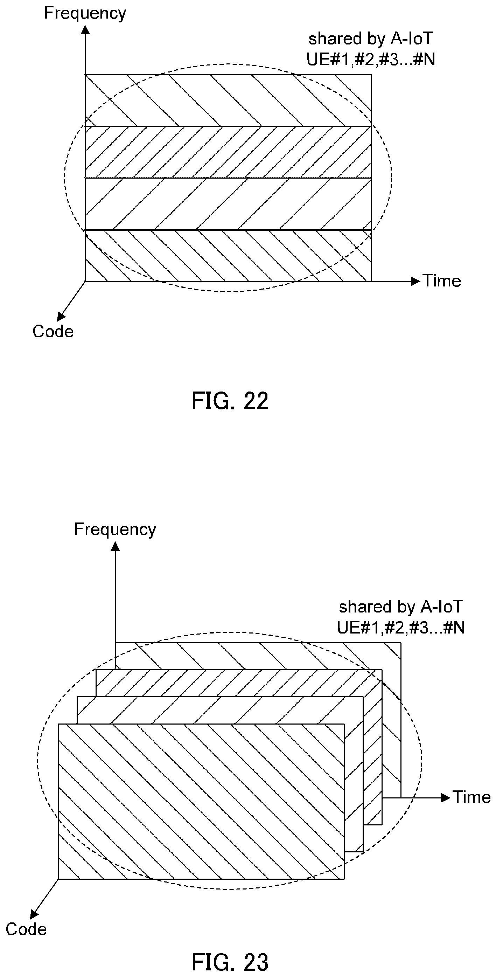

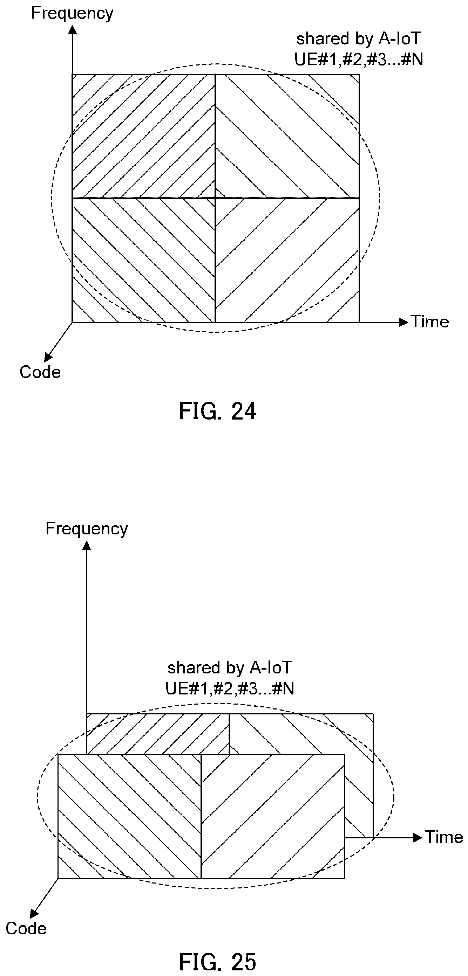

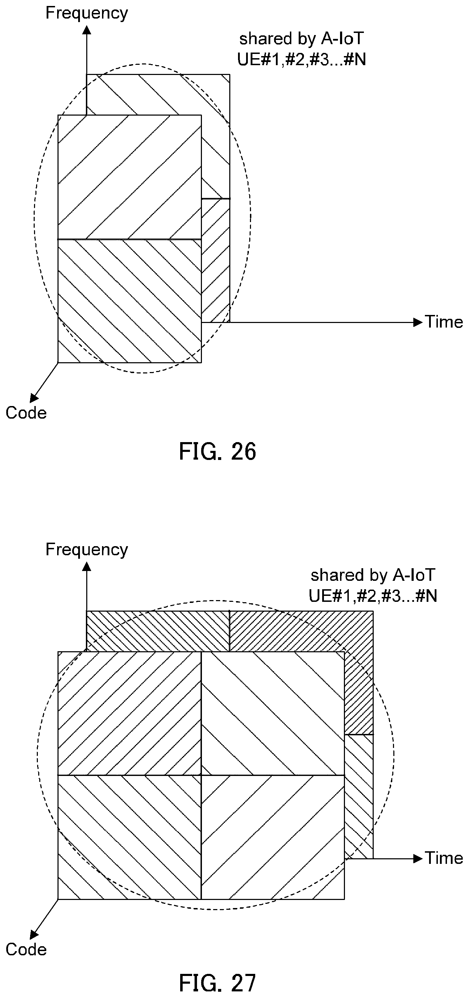

Note that FIG. 21 illustrates an example in which resources of different A-IoT UEs are TDM. FIG. 22 illustrates an example in which resources of different A-IoT UEs are FDM. FIG. 23 illustrates an example in which resources of different A-IoT UEs are CDM. FIG. 24 illustrates an example in which resources of different A-IoT UEs are TDM and FDM. FIG. 25 illustrates an example in which resources of different A-IoT UEs are TDM and CDM. FIG. 26 illustrates an example in which resources of different A-IoT UEs are FDM and CDM. FIG. 27 illustrates an example in which resources of different A-IoT UEs are TDM, FDM, and CDM.

### <Proposal 1: Option 2b>

A plurality of time/frequency/code domain resources are provided to one group of A-IoT UEs. The plurality of resources are allocated to the plurality of A-IoT UEs in a contention-free manner. Note that the plurality of resources may be allocated to the plurality of A-IoT UEs by common signaling.

For example, in <Proposal 1: Option 2b>, the number of resources allocated to the A-IoT UE is the same as or greater than the number of A-IoT UEs. For example, 10 resources are allocated to 10 A-IoT UEs. Thus, in <Proposal 1: Option 2b>, the plurality of resources are allocated to the plurality of A-IoT UEs in a contention-free manner.

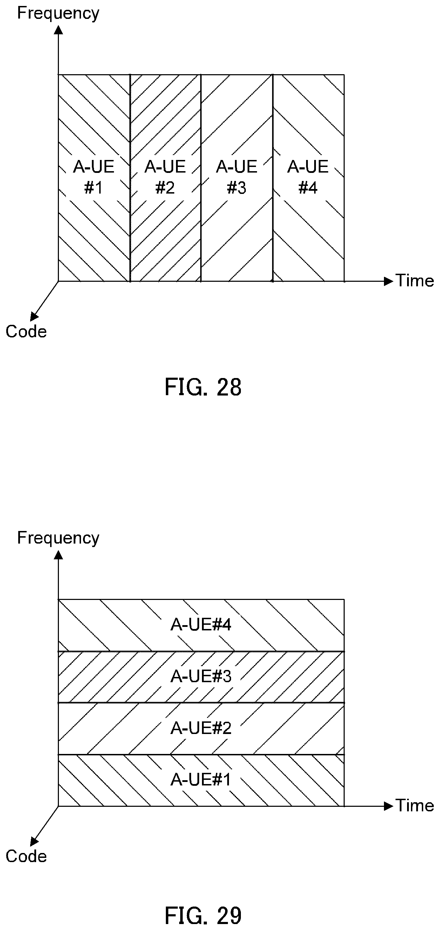

FIGS. 28 to 34 are diagrams illustrating Proposal 1: Option 2b. As illustrated in FIGS. 28 to 34, a plurality of time/frequency/code domain resources are respectively provided to a plurality (one group) of A-IoT UEs.

For example, in FIG. 28, one of four resources is provided to A-IoT UE#1 among four A-IoT UEs. One of the four resources is provided to A-IoT UE#2 among the four A-IoT UEs. One of the four resources is provided to A-IoT UE#3 among the four A-IoT UEs. One of the four resources is provided to A-IoT UE#4 among the four A-IoT UEs. Therefore, the four resources are allocated to the four A-IoT UEs in a contention-free manner.

The A-IoT UE may determine one resource to be used for transmission, based on at least one of a defined rule, A-IoT UE-specific/common parameters indicated by the network, and/or parameters defined in the A-IoT UE such as an ID of the A-IoT UE. The rule in <Proposal 1: Option 2b> is different from the rule in <Proposal 1: Option 2a>, and A-IoT UE-specific resource allocation is performed.

The information on the plurality of resources may be broadcast or multicast to the plurality of A-IoT UEs in Step 2, for example.

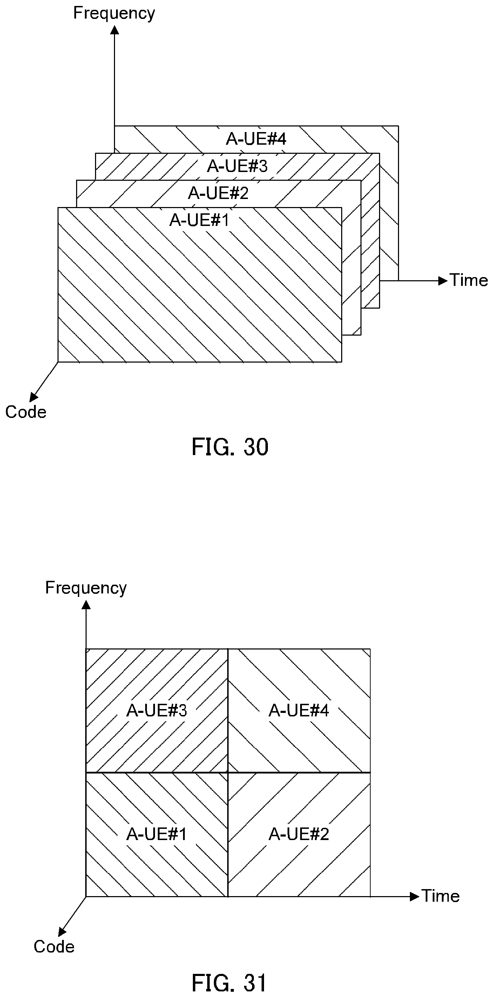

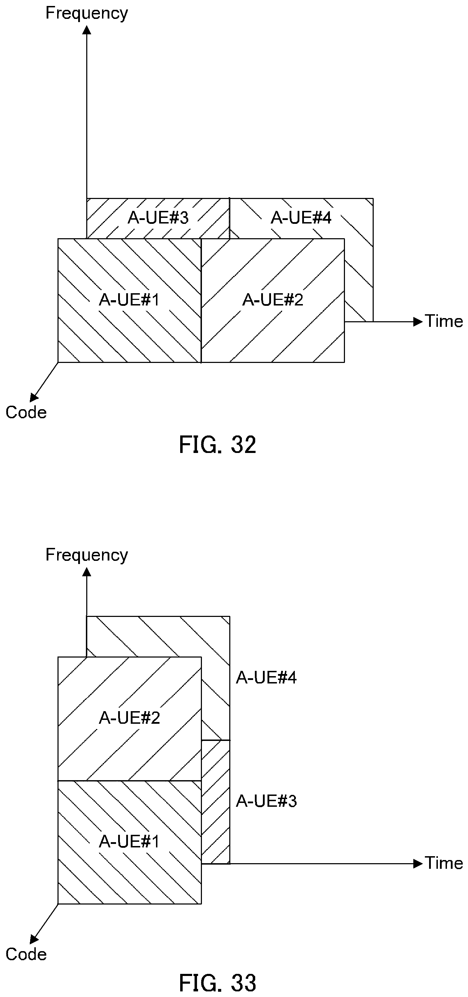

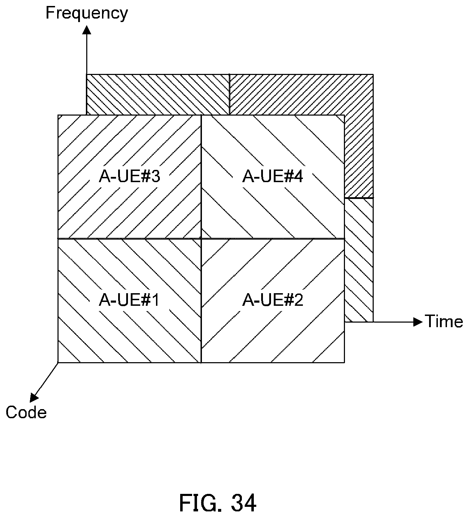

FIG. 28 illustrates an example in which resources of different A-IoT UEs are TDM. FIG. 29 illustrates an example in which resources of different A-IoT UEs are FDM. FIG. 30 illustrates an example in which resources of different A-IoT UEs are CDM. FIG. 31 illustrates an example in which resources of different A-IoT UEs are TDM and FDM. FIG. 32 illustrates an example in which resources of different A-IoT UEs are TDM and CDM. FIG. 33 illustrates an example in which resources of different A-IoT UEs are FDM and CDM. FIG. 34 illustrates an example in which resources of different A-IoT UEs are TDM, FDM, and CDM.

### <Proposal 1: Variation>

The A-IoT UE may derive the resource from information received in Step 2, predefined information, or information (e.g., pre-configured information) indicated by physical layer or higher layer signaling different from the above information.

The time resource may be defined based on the start (start position) and the number of time units such as symbols or slots.

The frequency resource may be defined based on the start (start position) and the number of frequency units such as subcarriers or resource blocks (RBs).

The code resource may be defined based on the base sequence (reference sequence) length, the base sequence index, the cyclic shift, and/or the orthogonal cover code index (OCC index).

The time relationship in Step 3 may be defined as an offset with respect to Step 2 or Step 1. For example, the start position (start time) of the signal transmitted in Step 3 may be defined as an offset with respect to the reception start position or the reception end position of the information received in Step 2 or an offset with respect to the reception start position or the reception end position of the signal received in Step 1.

### <Proposal 1: Summary>

As described above, an A-IoT UE acquires one resource provided to a plurality of A-IoT UEs (group of A-IoT UEs) in contention with the plurality of A-IoT UEs. With this operation, the A-IoT UE can perform the transmission in Step 3 (transmission of a signal in Step 3) using the resource acquired in contention and can appropriately transmit the signal.

The A-IoT UE acquires one of the plurality of resources provided to the plurality of A-IoT UEs in contention with the plurality of A-IoT UEs. With this operation, the A-IoT UE can perform the transmission in Step 3 using the resource acquired in contention and can appropriately transmit the signal.

The A-IoT UE acquires one of the plurality of resources provided to the plurality of A-IoT UEs without contention with the plurality of A-IoT UEs. With this operation, the A-IoT UE can perform the transmission in Step 3 using the resource acquired without contention and can appropriately transmit the signal.

### <Proposal 2>

In Proposal 2, techniques for allocation of consecutive resources and allocation of non-consecutive resources are proposed.

In the case of <Proposal 1: Option 2a> and <Proposal 1: Option 2b>, the plurality of time/frequency/code domain resources are provided to one group of A-IoT UEs. Regarding the resources provided to one group of A-IoT UEs, the following Options 1a, 1b, 2a, 2b, and 3 are proposed.

### <Proposal 2: Option 1a>

Consecutive time resources are allocated to A-IoT UEs.

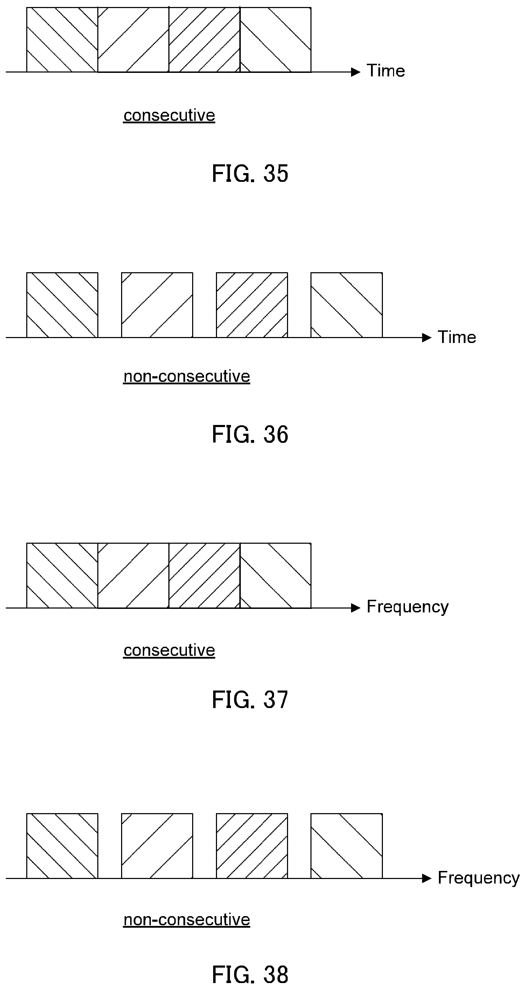

FIG. 35 is a diagram illustrating Proposal 2: Option 1a. As illustrated in FIG. 35, consecutive time resources are allocated to A-IoT UEs. Each time resource may include the same number of time units or may include a different number of time units.

### <Proposal 2: Option 1b>

Non-consecutive time resources are allocated to A-IoT UEs.

FIG. 36 is a diagram illustrating Proposal 2: Option 1b. As illustrated in FIG. 36, non-consecutive time resources are allocated to A-IoT UEs. Each time resource may include the same number of time units or may include a different number of time units.

The gap between time resources may be predefined or may be indicated (e.g., pre-configured) by physical layer or higher layer signaling.

### <Proposal 2: Option 2a>

Consecutive frequency resources are allocated to A-IoT UEs.

FIG. 37 is a diagram illustrating Proposal 2: Option 2a. As illustrated in FIG. 37, consecutive frequency resources are allocated to A-IoT UEs. Each frequency resource may include the same number of frequency units or may include a different number of frequency units.

### <Proposal 2: Option 2b>

Non-consecutive frequency resources are allocated to A-IoT UEs.

FIG. 38 is a diagram illustrating Proposal 2: Option 2b. As illustrated in FIG. 38, non-consecutive frequency resources are allocated to A-IoT UEs. Each frequency resource may include the same number of frequency units or may include a different number of frequency units.

The gap between frequency resources may be predefined or may be indicated (e.g., pre-configured) by physical layer or higher layer signaling.

### <Proposal 2: Option 3>

A plurality of code resources are allocated to A-IoT UEs. The plurality of code resources may be a plurality of sequences/cyclic shifts/orthogonal cover codes.

### <Proposal 2: Variation>

As described in Proposal 1, a combination of TDM/FDM/CDM is considered for the resources of the plurality of A-IoT UEs. The following resources may be allocated to the plurality of A-IoT UEs.
- The same time domain resource(s) + different frequency domain resource(s)/code domain resource(s)
- The same time domain resource(s) + the same frequency domain resource(s) + different code domain resource(s)
- The same time domain resource(s) + the same code domain resource(s) + different frequency domain resource(s)
- The same frequency domain resource(s) + different time domain resource(s)/code domain resource(s)
- The same frequency domain resource(s) + the same code domain resource(s) + different time domain resource(s)
- The same code domain resource(s) + different time domain resource(s)/frequency domain resource(s)

FIG. 28 illustrates an example in which different time domain resources and the same frequency domain resource are allocated to a plurality of A-IoT UEs. FIG. 29 illustrates an example in which the same time domain resource and different frequency domain resources are allocated to a plurality of A-IoT UEs.

### <Proposal 2: Summary>

As described above, the A-IoT UE performs the transmission in Step 3 using consecutive resources. With this operation, the A-IoT UE can perform the transmission in Step 3 using consecutive resources and can appropriately transmit the signal.

The A-IoT UE performs the transmission in Step 3 using non-consecutive resources. With this operation, the A-IoT UE can perform the transmission in Step 3 using non-consecutive resources and can appropriately transmit the signal.

### <Proposal 3>

In Proposal 3, a technique for identifying (distinguishing) a plurality of resources is proposed.

In the case of <Proposal 1: Option 2b>, a plurality of time/frequency/code domain resources are provided to one group of A-IoT UEs and are allocated in a contention-free manner. To distinguish the plurality of resources, indexes are assigned to the plurality of resources. Regarding the assignment of indexes, the following Options 1, 2, and 3 are proposed.

### <Proposal 3: Option 1>

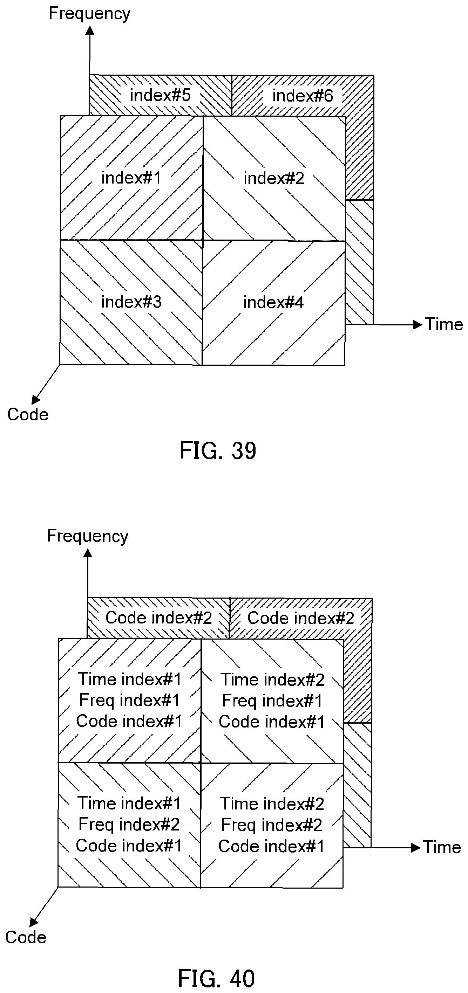

FIG. 39 is a diagram illustrating Proposal 3: Option 1. As illustrated in FIG. 39, one resource allocated to one A-IoT UE is represented by one index. The index is counted from three dimensions (time, frequency, and code). For example, index#1, #2, ..., #8 are counted for three-dimensional resources in a time domain, a frequency domain, and a code domain. The order in which the indexes are assigned may be based on the following a to f.
a. First, time domain, then frequency domain, and then code domain
b. First, time domain, then code domain, and then frequency domain
c. First, frequency domain, then time domain, and then code domain
d. First, frequency domain, then code domain, and then time domain
e. First, code domain, then time domain, and then frequency domain
f. First, code domain, then frequency domain, and then time domain

One index may be provided in Step 2 in the communication flow. One index may be provided by physical layer or higher layer signaling from the network.

One index may be determined based on at least one of a defined rule, A-IoT UE-specific/common parameters indicated by the network, and/or predefined parameters for A-IoT UEs such as an ID of the A-IoT UE.

When only one or two dimensions of the time/frequency/code domain resource are supported, the index may be counted from only one or two dimensions.

### <Proposal 3: Option 2>

FIG. 40 is a diagram illustrating Proposal 3: Option 2. As illustrated in FIG. 40, one resource allocated to one A-IoT UE is represented by three indexes. Each index is counted from one dimension. For example, Time index #1 and #2 are counted in the time domain for each resource. Freq index #1 and #2 are counted in the frequency domain for each resource. Code index #1 and #2 are counted in the code domain for each resource.

The index for each dimension may be provided in Step 2 in the communication flow. The index for each dimension may be provided by physical layer or higher layer signaling from the network.

The index for each dimension may be determined based on at least one of a defined rule, A-IoT UE-specific/common parameters indicated by the network, and/or predefined parameters for A-IoT UEs such as the ID of the A-IoT UE.

When only one or two dimensions of the time/frequency/code domain resource are supported, the index may be counted from only one or two dimensions.

### <Proposal 3: Option 3>

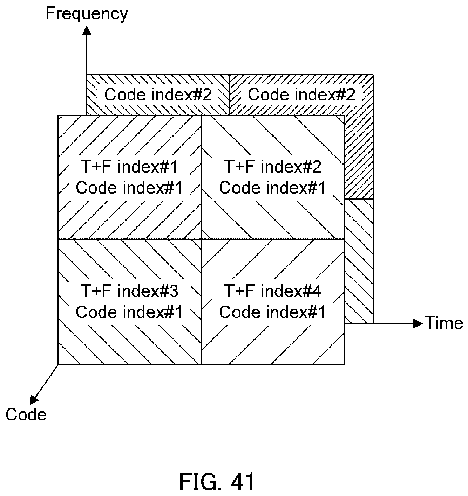

FIG. 41 is a diagram illustrating Proposal 3: Option 3. As illustrated in FIG. 41, one resource allocated to one A-IoT UE is represented by two indexes. One index of the two indexes is counted from one dimension, and the other index is counted from two dimensions.

The dimensions of the two indexes may be based on any one of the following a to c. Note that FIG. 41 illustrates an example of a.

### a. One index for time domain and frequency domain, and one index for code domain

The order in which the indexes are assigned to time domain and frequency domain may be based on the following a1 or a2.
- a1. First, time domain, and then frequency domain
- a2. First, frequency domain, and then time domain

### b. One index for time domain and code domain, and one index for frequency domain

The order in which the indexes are assigned to time domain and code domain may be based on the following b1 or b2.
- b1. First, time domain, and then code domain
- b2. First, code domain, and then time domain

### c. One index for frequency domain and code domain, and one index for time domain

The order in which the indexes are assigned to frequency domain and code domain may be based on the following c1 or c2.
- c1. First, frequency domain, and then code domain
- c2. First, code domain, and then frequency domain

The indexes in one dimension and two dimensions may be provided in Step 2 in the communication flow. The indexes in one dimension and two dimensions may be provided by physical layer or higher layer signaling from the network.

The indexes in one dimension and two dimensions may be determined based on at least one of a defined rule, A-IoT UE-specific/common parameters indicated by the network, and/or predefined parameters for A-IoT UEs such as the ID of the A-IoT UE.

### <Proposal 3: Summary>

As described above, indexes are assigned to resources, and the resources allocated to A-IoT UEs are distinguished. With this configuration, the A-IoT UE can perform the transmission in Step 3 using the distinguished resource and can appropriately transmit the signal.

### <Proposal 4>

In Proposal 4, a technique for selecting a plurality of resources is proposed.

In the case of <Proposal 1: Option 2a>, a plurality of time/frequency/code domain resources are provided to one group of A-IoT UEs and are allocated in a contention-based manner. Regarding the selection of the resource in a contention-based manner, the following Options 1, 2, and 3 are proposed.

### <Proposal 4: Option 1>

Regarding the distinction of resources, <Proposal 3: Option 1> is used. That is, one resource is represented by one index, and the index is counted from three dimensions (time, frequency, and code). Note that, in the case where only one or two dimensions of the time/frequency/code domain resource are supported, the index may be counted from only one or two dimensions.

One index may be randomly selected by the A-IoT UE.

One index may be selected by the A-IoT UE by applying certain defined rules. The rules may consider A-IoT UE-specific/common parameters indicated by the network or parameters defined in the A-IoT UE such as an ID of the A-IoT UE. Various resources are provided by these rules/parameters and the like, and the A-IoT UE randomly selects one resource from these resources. That is, the A-IoT UE may determine Y indexes from X indexes notified from the base station based on at least one of A-IoT UE-specific/common parameters indicated by the network and/or predefined parameters for the A-IoT UE such as the ID of the A-IoT UE, and may randomly select one index from the Y indexes.

One index may be determined based on at least one of a defined rule, A-IoT UE-specific/common parameters indicated by the network, and/or a predefined parameter for the A-IoT UE such as an ID of the A-IoT UE. One resource is provided by these rules, parameters, and the like.

### <Proposal 4: Option 2>

Regarding the distinction of resources, <Proposal 3: Option 2> is used. That is, one resource allocated to one A-IoT UE is represented by three indexes, and each index is counted from one dimension. Note that, in the case where only one or two dimensions of the time/frequency/code domain resource are supported, the index may be counted from only one or two dimensions.

In each dimension, one index may be randomly selected by the A-IoT UE.

In each dimension, one index may be selected by the A-IoT UE by applying some defined rules. The rule may consider A-IoT UE-specific/common parameters indicated by the network or parameters defined in the A-IoT UE such as an ID of the A-IoT UE. Various resources are provided by these rules/parameters and the like, and the A-IoT UE randomly selects one resource from these resources. In other words, for each dimension, the A-IoT UE may determine Y indexes from X indexes notified from the base station based on at least one of A-IoT UE-specific/common parameters indicated by the network and predefined parameters for the A-IoT UE such as an ID of the A-IoT UE, and may randomly select one index from the Y indexes.

In each dimension, one index may be determined based on at least one of a defined rule, A-IoT UE-specific/common parameters indicated by the network, and/or predefined parameters for the A-IoT UE such as an ID of the A-IoT UE. One resource is derived from these rules, parameters, and the like.

### <Proposal 4: Option 3>

Regarding the distinction of resources, <Proposal 3: Option 2> is used. That is, one resource allocated to one A-IoT UE is represented by two indexes, one index of the two indexes is counted from one dimension, and the other index is counted from two dimensions.

In one dimension and two dimensions, one index may be randomly selected by the A-IoT UE.

In one dimension and two dimensions, one index may be selected by the A-IoT UE by applying some defined rules. The rule may consider A-IoT UE-specific/common parameters indicated by the network or parameters defined in the A-IoT UE such as an ID of the A-IoT UE. Various resources are provided by these rules/parameters and the like, and the A-IoT UE randomly selects one resource from these resources. In other words, for determination of each index, the A-IoT UE may determine Y indexes from X indexes notified from the base station based on at least one of A-IoT UE-specific/common parameters indicated by the network and/or predefined parameters for the A-IoT UE such as an ID of the A-IoT UE, and may randomly select one index from the Y indexes.

In one dimension and two dimensions, one index may be determined based on at least one of a defined rule, A-IoT UE-specific/common parameters indicated by the network, and/or predefined parameters for the A-IoT UE such as an ID of the A-IoT UE. One resource is derived from these rules, parameters, and the like.

### <Proposal 4: Summary>

As described above, the A-IoT UE selects (designates) the resource used for the transmission in Step 3 using the index. With this operation, the A-IoT UE can perform the transmission in Step 3 using the resource selected using the index, and can appropriately transmit the signal.

### <Proposal 5>

In Proposal 5, a technique for a carrier waveform/modulation/coding scheme/scrambling RNTI used for the transmission of the A-IoT UE (signal transmission in Step 3) is proposed.

In the case of <Proposal 1: Option 1a> and <Proposal 1: Option 2a>, that is, in the case where resource(s) are used in a contention-based manner, a carrier waveform/modulation/coding scheme/scrambling RNTI used for the transmission of the A-IoT UE is defined in advance or is provided by cell-common/group-common parameters. Note that RNTI is an abbreviation for Radio Network Temporary Identifier.

In the case of <Proposal 1: Option 1b> and <Proposal 1: Option 2b>, that is, in the case where resource(s) are used in a contention-free manner, the carrier waveform/modulation/coding scheme/scrambling RNTI used for the transmission of the A-IoT UE is provided by A-IoT UE-specific parameters.

Note that, in the case where the resource is used in a contention-free manner, the carrier waveform/modulation/coding scheme/scrambling RNTI used for the transmission of the A-IoT UE may be defined in advance or may be provided by cell-common/group-common parameters.

### <Proposal 5: Summary>

As described above, the A-IoT UE determines the carrier waveform/modulation/coding scheme/scrambling RNTI used for the signal transmission in Step 3, according to a predetermined rule. With this operation, the A-IoT UE can perform the transmission in Step 3 based on the carrier waveform/modulation/coding scheme/scrambling RNTI determined by the predetermined rule and can appropriately transmit the signal.

### <Proposal 6>

In Proposal 6, a technique for preamble transmission in the signal transmission in Step 3 is proposed.

In the case of <Proposal 1: Option 1a> and <Proposal 1: Option 2a>, that is, in the case where resource(s) are used in a contention-based manner, the transmission from the A-IoT UE (transmission in Step 3) may be divided into two steps. For example, Step 3 may be divided into the following Step 3a and Step 3b.

Step 3a: The A-IoT UE transmits a preamble.

Step 3b: The A-IoT UE transmits a signal (UL data).

Each of the proposals described above may be applied to Steps 3a and 3b.

A preamble sequence in Step 3a may be specific to an A-IoT UE. For example, the preamble sequence in Step 3a may include an ID of the A-IoT UE.

When the preamble sequence in Step 3a is specific to an A-IoT UE, the carrier waveform/modulation/coding scheme/scramble RNTI used for the transmission in Step 3b is provided by A-IoT UE-specific parameters. The carrier waveform/modulation/coding scheme/scramble RNTI may still be predefined or may be provided by cell-common/group-common parameters.

In other cases (in the case where the preamble sequence in Step 3a is not specific to an A-IoT UE), the carrier waveform/modulation/coding scheme/scramble RNTI used for the transmission in Step 3b is predefined or provided by cell-common/group-common parameters.

In the case of <Proposal 1: Option 1a>, that is, in the case where one resource is provided to a plurality of A-IoT UEs, the time/frequency/code domain resources in Step 3a and Step 3b have a predefined relationship. For example, a predefined/designated offset may be present between the resources in Step 3a and Step 3b.

In the case of <Proposal 1: Option 2a>, that is, in the case where a plurality of time/frequency/code domain resources are provided to a plurality of A-IoT UEs, the time/frequency/code domain resources in Step 3a and Step 3b have a predefined relationship. The one resource in Step 3a is paired with the one resource in Step 3b by the predefined relationship. The A-IoT UE uses the pair of resources for the transmissions in Step 3a and Step 3b.

For example, as described in Proposal 3, when indexes are assigned to resources, a resource having the same index may be used in Step 3a and Step 3b. That is, the resource in Step 3b may be automatically determined from the resource in Step 3a. A predefined/designated offset may be present between the resources in Step 3a and Step 3b.

### <Proposal 6: Summary>

As described above, Step 3 in the communication flow is divided into two Steps 3a and 3b, and the A-IoT UE transmits a preamble in Step 3a. By this operation, the A-IoT UE can appropriately transmit a signal.

### <Proposal 7>

In Proposal 7, a technique for reducing (decreasing) collision of transmission in Step 3 of an A-IoT UE is proposed.

In the case of <Proposal 1: Option 1a> and <Proposal 1: Option 2a>, that is, in the case where resource(s) are used in a contention-based manner, the A-IoT UE transmits Step 3 (signal) with probability x. In other words, the A-IoT UE does not transmit Step 3 with probability 1-x. When the A-IoT UE transmits a signal in Step 3, the A-IoT UE determines the resource and performs the transmission based on each of the proposals described above.

As one of the possible implementations in the A-IoT UE, the A-IoT UE randomly generates (selects) a number from N numbers of 0, 1, ..., and (N-1). The A-IoT UE transmits a signal in Step 3 based on the generated number. N is a natural number of 2 or more.

For example, when the number generated from 0, 1, ..., and (N-1) is 0 (which may be m), the A-IoT UE transmits a signal in Step 3. When the generated number is not 0, the A-IoT UE does not transmit a signal in Step 3. In this case, the probability x that the A-IoT UE transmits a signal in Step 3 is 1/N.

When the transmission in Step 3 fails (when the generated number is not 0 and transmission in Step 3 is not performed), the A-IoT UE waits for another information in Step 2. That is, the A-IoT UE may attempt to receive information related to another resource allocation from the base station. The other information is information for transmission in Step 3. The A-IoT UE receives the other information and performs the transmission in Step 3 (attempts transmission in Step 3 again).

When the transmission in Step 3 fails, the A-IoT UE may perform the transmission in Step 3 based on the following Options 1 to 4.

### <Proposal 7: Option 1>

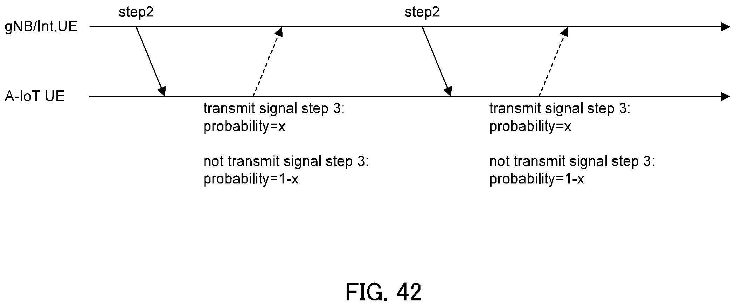

FIG. 42 is a diagram illustrating Proposal 7: Option 1. The A-IoT UE transmits a signal in Step 3 with probability x each time the information in Step 2 is received. In other words, the A-IoT UE does not transmit a signal in Step 3 with probability 1-x each time the information in Step 2 is received. The range of the value generated by the A-IoT UE is the same for each reception in Step 2, and is 0, 1, ..., (N-1).

The A-IoT UE receives the information in Step 2 until transmission is performed in Step 3 (until the transmission in Step 3 is successful).

### <Proposal 7: Option 2>

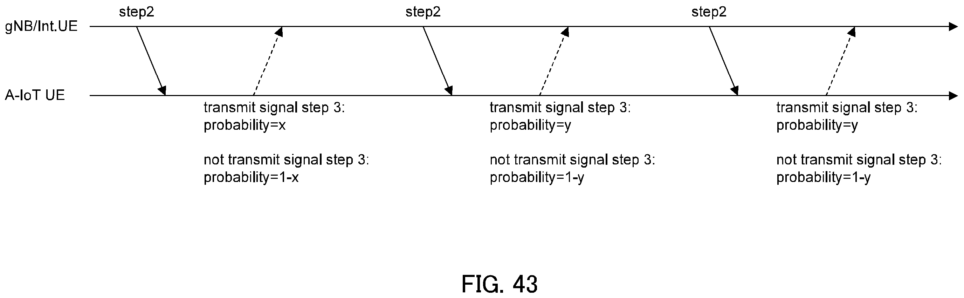

FIG. 43 is a diagram illustrating Proposal 7: Option 2. The A-IoT UE transmits a signal in Step 3 with probability x when the information in Step 2 is received for the first time. In other words, the A-IoT UE does not transmit a signal in Step 3 with probability 1-x when the information in Step 2 is received for the first time.

Thereafter, the A-IoT UE transmits a signal in Step 3 with probability y (y > x) each time the information in Step 2 is received. In other words, the A-IoT UE does not transmit a signal in Step 3 with probability 1-y each time the information in Step 2 is received.

The range of the value generated by the A-IoT UE is 0, 1, ..., (N-1) when the information in Step 2 is received for the first time. Thereafter, the range of the value generated by the A-IoT UE is the same in each reception in Step 2, and is 0, 1, ..., (M-1) (M < N). The above-described probability y is 1/M.

The A-IoT UE receives the information in Step 2 until transmission is performed in Step 3 (until the transmission in Step 3 is successful).

### <Proposal 7: Option 3>

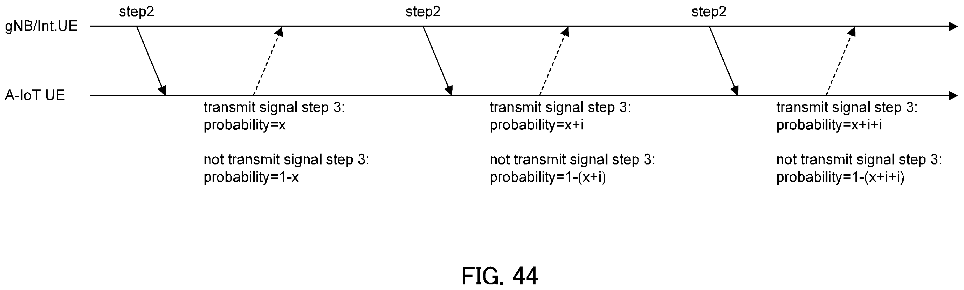

FIG. 44 is a diagram illustrating Proposal 7: Option 3. The A-IoT UE transmits a signal in Step 3 with probability x when the information in Step 2 is received for the first time. In other words, the A-IoT UE does not transmit a signal in Step 3 with probability 1-x when the information in Step 2 is received for the first time.

Thereafter, the A-IoT UE transmits a signal in Step 3 with probability x + (n-1)i (n is the number of times of reception of the information, and i is a constant) each time the information in Step 2 is received. In other words, the A-IoT UE does not transmit a signal in Step 3 with probability 1-{x+(n-1)i} each time the information in Step 2 is received.

The range of the value generated by the A-IoT UE is 0, 1, ..., (N-1) when the information in Step 2 is received for the first time. Thereafter, the range of the value generated by the A-IoT UE is gradually decreased in each reception in Step 2. For example, the value of N may be decreased by j (N-j, N-2j, ...).

The A-IoT UE receives the information in Step 2 until transmission is performed in Step 3 (until the transmission in Step 3 is successful).

### <Proposal 7: Option 4>

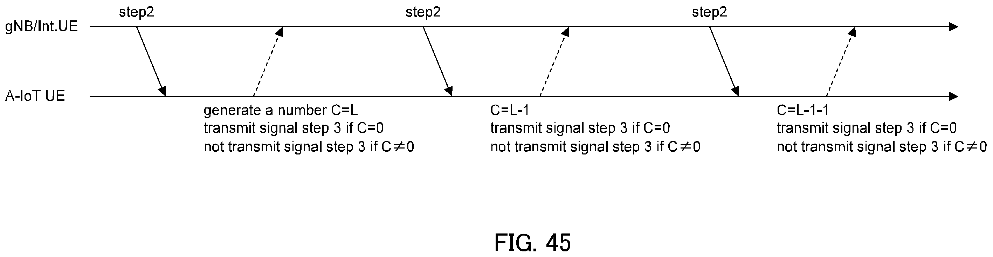

FIG. 45 is a diagram illustrating Proposal 7: Option 4. In <Proposal 7: Option 4>, the A-IoT UE randomly generates a number from 0, 1, ..., (N-1) when the information in Step 2 is received for the first time. The A-IoT UE transmits a signal in Step 3 when the generated number is 0 (which may be m). In other words, the A-IoT UE does not transmit a signal in Step 3 when the generated number is not 0. The A-IoT UE stores, in the storage section, the number "L" (L ≠ 0) generated when the information in Step 2 is received for the first time.

Thereafter, each time the A-IoT UE receives the information in Step 2, the A-IoT UE subtracts 1 (or specific integer value) from the number "L" stored in the storage section. The A-IoT UE transmits a signal in Step 3 when the subtracted value becomes 0.

### <Proposal 7: Variation 1>

The information in Step 2 may include information for distinguishing (identifying) a scheduling round. In other words, whether information in Step 2 is for the same scheduling round as the previous Step 2 is distinguished.

A scheduling round refers to scheduling until all of A-IoT UEs in one group complete signal transmission (signal transmission in step 3) for transmission and/or reception of certain specific information. For example, the network indicates signal transmission using 10 resources to 100 A-IoT UEs. In this case, the network repeats information transmission in Step 2 ten times, and the 100 A-IoT UEs perform signal transmission in Step 3 in groups of ten. These ten times of information transmission in Step 2 and ten times of signal transmission in Step 3 become one scheduling round. The A-IoT UE distinguishes a scheduling round based on information for distinguishing a scheduling round included in information in Step 2, and distinguishes whether previously received information in Step 2 is information of the same scheduling round. When the received information in Step 2 indicates a new scheduling round, the A-IoT UE resets the probability and the generated number to their initial values (e.g., resets parameters such as x, N, and L to their initial values).

The information in Step 2 may include information indicating what number of information transmission it is in one scheduling round. In other words, what number of information transmission it is in one scheduling round is distinguished for information in Step 2.

For example, in the case of the above example, information indicating whether it is the first (initial) information transmission or the second information transmission among ten times of information transmissions in Step 2 within one scheduling round is included in information in Step 2. The A-IoT UE determines whether the received information is 'first-time' information, based on the information indicating the number of the information transmission included in information in Step 2 (see <Proposal 7: Option 2>, <Proposal 7: Option 3>, and <Proposal 7: Option 4>).

### <Proposal 7: Variation 2>

When the transmission in Step 3 is successful, the A-IoT UE may reset the probability and the generated number to their initial values (e.g., parameters such as x, N, and L may be reset to their initial values).

The term "successful" may mean a case where the A-IoT UE successfully performs the transmission, a case where the A-IoT UE receives an ACK from the network in the PHY layer, or a case where the A-IoT UE receives an ACK from the network in the higher layer.

### <Proposal 7: Variation 3>

The network may transmit P pieces of Step 2 information for the scheduling round of the A-IoT UE group.

The parameters such as x, N, y, M, i, j, m, and L described in <Proposal 7: Option 1> to <Proposal 7: Option 4> may be provided by physical layer or higher layer signaling or may be defined in specifications.

### <Proposal 7: Summary>

As described above, when the A-IoT UE receives the information in Step 2, the A-IoT UE determines the transmission in Step 3 based on a predetermined probability. With this operation, the A-IoT UE can reduce collision of transmission in Step 3.

### <Proposal 8>

In Proposal 8, a technique for reducing (decreasing) collision of transmission in Step 3 of an A-IoT UE is proposed.

In the case of <Proposal 1: Option 1a> and <Proposal 1: Option 2a>, that is, in the case where resources are used in a contention-based manner, the transmissions of A-IoT UEs in Step 3 may collide.

When the A-IoT UE receives another Step 2 information after the transmission in Step 3 is successful, the A-IoT UE may perform the following operations of Option 1 or 2. Note that the meaning of "successful" is described in <Proposal 7: Variation 2>.

### <Proposal 8: Option 1>

In a case where there is data in the UL buffer, the A-IoT UE performs the transmission in Step 3. The transmission in Step 3 may be a transmission based on each of the above proposals.

### <Proposal 8: Option 2>

As described in <Proposal 7: Variation 1>, it is distinguished whether the information in Step 2 is for the same scheduling round as the previous Step 2.

After transmission in Step 3 is successful for certain Step 2 information, when the A-IoT UE receives another Step 2 information in the same scheduling round as the certain Step 2, the A-IoT UE does not transmit the signal in Step 3 for the other Step 2 information.

After transmission in Step 3 is successful for certain Step 2 information, when the A-IoT UE receives another Step 2 information in a different (new) scheduling round from the certain Step 2, the A-IoT UE transmits a signal in Step 3 for the other Step 2 information.

### <Proposal 8: Summary>

As described above, after transmission in Step 3 is successful, the A-IoT UE determines whether to transmit a signal in Step 3, based on whether Step 2 information is received in the same scheduling round as the Step 2 information that triggered the transmission in Step 3. By this operation, the A-IoT UE can appropriately transmit a signal.

### <Variation>

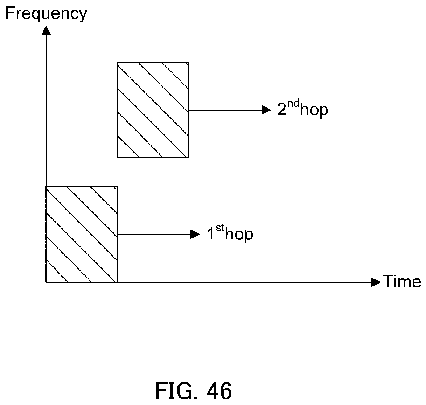

FIG. 46 illustrates an example of Variation. In each of the above proposals, frequency hopping may be applied to frequency resource determination of the A-IoT UE.

Massive connectivity is one of target scenarios of 6G. In massive connectivity, contention-based uplink transmission is a solution candidate. Applicability of the proposals is not limited to A-IoT, and the proposals may be used in other massive connectivity scenarios.

### <Configuration of Base Station>

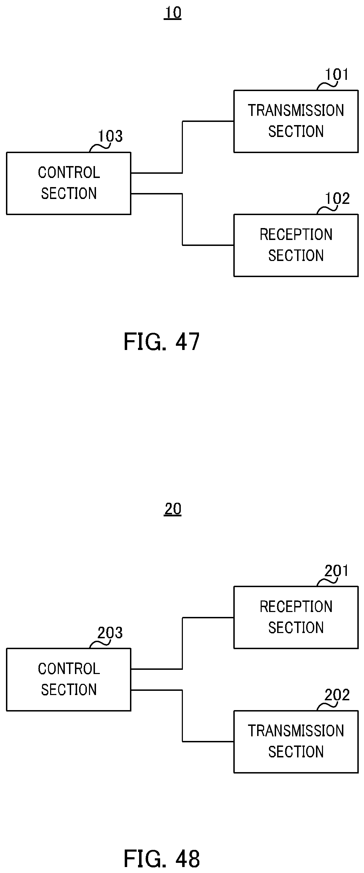

FIG. 47 is a block diagram illustrating an example of a configuration of base station 10 according to the embodiment. Base station 10 includes, for example, transmission section 101, reception section 102, and control section 103. Base station 10 communicates with device 20 (see FIG. 48) by radio. Base station 10 may be an intermediate node, an assisting node, or a terminal (terminal of SL that communicates with device 20).

Transmission section 101 transmits a downlink (DL) signal to device 20. For example, transmission section 101 transmits the DL signal under the control of control section 103.

The DL signal may include, for example, a data signal of a downlink and control information (e.g., Downlink Control Information (DCI)). Further, the DL signal may include information (e.g., UL grant) indicating scheduling related to signal transmission of device 20. In addition, the DL signal may include control information of a higher layer (e.g., control information of Radio Resource Control (RRC)). Furthermore, the DL signal may include a reference signal.

The channels used for transmitting the DL signal include, for example, data channels and control channels. For example, the data channels may include a physical downlink shared channel (PDSCH), and the control channels may include a physical downlink control channel (PDCCH). For example, base station 10 transmits control information to device 20 using a PDCCH and transmits a downlink data signal to device 20 using a PDSCH.

The reference signal included in the DL signal may include, for example, at least one of a demodulation reference signal (DMRS), a phase tracking reference signal (PTRS), a channel state information-reference signal (CSI-RS), a sounding reference signal (SRS), or a positioning reference signal (PRS) for position information. For example, the reference signal such as the DMRS and the PTRS is used for demodulating the data signal of the downlink, and is transmitted using the PDSCH.

Reception section 102 receives an uplink (UL) signal transmitted from device 20. For example, reception section 102 receives the UL signal under the control of control section 103.

Control section 103 controls the communication operations of base station 10, including the transmission processing of transmission section 101 and the reception processing of reception section 102.

For example, control section 103 acquires information such as data and control information from a higher layer, and outputs the information to transmission section 101. In addition, control section 103 outputs the data and the control information received by reception section 102 to the higher layer.

For example, control section 103 allocates a resource (or a channel) used for transmission and reception of the DL signal and/or a resource used for transmission and reception of the UL signal based on the signal (e.g., data and control information) received from device 20 and/or the data and control information acquired from the higher layer. The information on the allocated resource may be included in the control information to be transmitted to device 20.

Control section 103 configures a PUCCH resource as an example of the allocation of a resource used for transmission and reception of a UL signal. Information on the configuration of the PUCCH, such as the PUCCH cell timing pattern (PUCCH configuration information), may be indicated to device 20 by RRC.

Here, control section 103 may provide one resource to a plurality of devices 20. The resource is a resource for the plurality of devices 20 to transmit a signal, and may be, for example, a time/frequency/code domain resource. The signal transmitted by the plurality of devices 20 may be a signal in Step 3 in the A-IoT communication flow.

Control section 103 may provide a plurality of resources to a plurality of devices 20. The number of the plurality of resources may be less than the number of the plurality of devices 20. The number of the plurality of devices 20 may be equal to or greater than the number of the plurality of devices 20.

Control section 103 may assign an index to the resource for device 20 to transmit a signal. Control section 103 may assign the index based on the method described in <Proposal 3>.

### <Configuration of Device>

FIG. 48 is a block diagram illustrating an example of a configuration of device 20 according to the embodiment. Device 20 is a device having a lower complexity than a Narrow Band-Internet of Things (NB-IoT) device, and is, for example, an A-IoT UE.

Device 20 includes, for example, reception section 201, transmission section 202, and control section 203. Device 20 communicates with, for example, base station 10 by radio. Device 20 may be, for example, an A-IoT device.

Reception section 201 receives a DL signal transmitted from base station 10. For example, reception section 201 receives the DL signal under the control of control section 203.

Transmission section 202 transmits a UL signal to base station 10. For example, transmission section 202 transmits the UL signal under the control of control section 203.

The UL signal may include, for example, an uplink data signal and control information (e.g., UCI). For example, information on processing capability of device 20 (e.g., UE capability) may also be included. Further, the UL signal may include a reference signal.

Channels used for UL signal transmission include, for example, a data channel and a control channel. For example, the data channel includes a Physical Uplink Shared Channel (PUSCH) and the control channel includes a Physical Uplink Control Channel (PUCCH). For example, device 20 receives control information from base station 10 using PUCCH and transmits an uplink data signal using PUSCH.

The reference signal included in the UL signal may include, for example, at least one of a DMRS, PTRS, CSI-RS, SRS, and PRS. For example, the reference signals such as the DMRS and the PTRS are used for demodulation of an uplink data signal and are transmitted using an uplink channel (e.g., PUSCH).

Control section 203 controls communication operations of device 20 including reception processing in reception section 201 and transmission processing in transmission section 202.

By way of example, control section 203 acquires information such as data and control information from a higher layer and outputs the information to transmission section 202. Further, control section 203 outputs, for example, the data, the control information, and/or the like received from reception section 201 to the higher layer.

For example, control section 203 controls transmission of information to be fed back to base station 10. The information to be fed back to base station 10 may include, for example, HARQ-ACK, Channel State Information (CSI), or Scheduling Request (SR). The information to be fed back to base station 10 may be included in UCI. The UCI is transmitted in a PUCCH resource.

Control section 203 configures a PUCCH resource based on the configuration information (e.g., configuration information such as a PUCCH cell timing pattern and/or DCI, which are/is indicated by RRC) received from base station 10. Control section 203 determines the PUCCH resource to be used for transmitting the information to be fed back to base station 10. Under the control of control section 203, transmission section 202 transmits the information to be fed back to base station 10 in the PUCCH resource determined by control section 203.

Note that, the channels used for DL signal transmission and the channels used for UL signal transmission are not limited to the examples mentioned above. For example, the channels used for the DL signal transmission and the channels used for the UL signal transmission may include a Random Access Channel (RACH) and a Physical Broadcast Channel (PBCH). The RACH may be used for, for example, transmission of Downlink Control Information (DCI) including a Random Access Radio Network Temporary Identifier (RA-RNTI).

Here, control section 203 may acquire one resource provided to a plurality of devices in contention with the plurality of devices. Control section 203 may acquire one of a plurality of resources provided to a plurality of devices in contention with the plurality of devices. Control section 203 may acquire one of the plurality of resources provided to the plurality of devices without contention with the plurality of devices. The resource may be a resource for signal transmission in Step 3 in the A-IoT communication flow. The resource may be a time/frequency/code domain resource.

Transmission section 202 may transmit a signal using the resource acquired by control section 203. The signal may be a signal in Step 3 in the A-IoT communication flow.

Control section 203 may acquire one of the plurality of resources, the number of which is less than the number of the plurality of devices, in contention with the plurality of devices. Control section 203 may acquire one of the plurality of resources, the number of which is equal to or greater than the number of the plurality of devices, without contention with the plurality of devices.

Control section 203 may acquire one of the plurality of resources, the number of which is equal to or greater than the number of the plurality of devices, based on at least one of a defined rule and/or parameters. The parameters may be, for example, A-IoT UE-specific/common parameters indicated by the network. The parameters may be parameters defined in the A-IoT UE, such as an ID of the A-IoT UE.

Control section 203 may randomly acquire one of the plurality of resources, the number of which is less than the number of the plurality of devices. Control section 203 may randomly acquire one of the plurality of resources, the number of which is equal to or greater than the number of the plurality of devices.

Control section 203 may determine (designate) a resource for a signal to be transmitted, by using an index assigned to the resource.

Here, reception section 201 may receive information from the network. The information may be information in Step 2 in the A-IoT communication flow.

When reception section 201 receives the information, control section 203 may determine transmission of a signal based on a predetermined probability. The signal may be a signal in Step 3 in the A-IoT communication flow.

Control section 203 may use the same probability each time reception section 201 receives the information to determine transmission of a signal. Control section 203 may set the probability of determining the transmission of a signal for the second and subsequent receptions of information to be higher than the probability of determining the transmission of a signal for the first reception of information. Control section 203 may increase the probability of transmitting a signal each time the information is received. The information may be information received in the same scheduling round.

Control section 203 may determine the transmission of a signal based on a number randomly selected from a predetermined range of numbers, such as 0, 1, ..., and (N-1). For example, control section 203 may determine to transmit a signal when the selected number is 0 (which may be m).

The present disclosure has been described, thus far. Note that the classification of items in the above description is not essential to the present disclosure, and matters described in two or more items may be used in combination as necessary, and matters described in one item may be applied to matters described in another item (as long as there is no contradiction).

### <Hardware Structure>

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

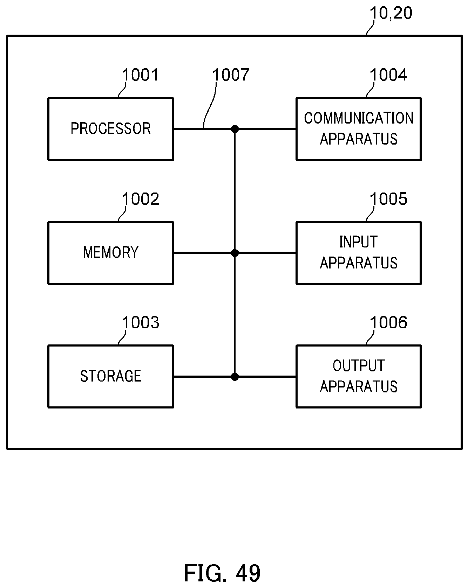

For example, a base station, a device, and so on according to one embodiment of the present disclosure may function as a computer that performs the processes of the radio communication method of the present disclosure. FIG. 49 is a diagram to show an example of a hardware structure of a base station and a device according to the present embodiment. Physically, the above-described base station 10 and device 20 may each be formed as a computer apparatus that includes processor 1001, memory 1002, storage 1003, communication apparatus 1004, input apparatus 1005, output apparatus 1006, bus 1007, and so on.

Note that in the present disclosure, the words such as an apparatus, a circuit, a device, a section, a unit, and so on can be interchangeably interpreted. The hardware structure of base station 10 and device 20 may be configured to include one or more of apparatuses illustrated in the drawings, or may be configured not to include part of apparatuses.

Each function of base station 10 and devices 20 is implemented, for example, by allowing certain software (programs) to be read on hardware such as processor 1001 and memory 1002, and by allowing processor 1001 to perform calculations to control communication via communication apparatus 1004 and control at least one of reading and writing of data in memory 1002 and storage 1003.

Processor 1001 controls the whole computer by, for example, running an operating system. Processor 1001 may be configured with a central processing unit (CPU), which includes interfaces with peripheral apparatus, control apparatus, computing apparatus, a register, and so on. For example, at least part of above-described control section 103, control section 203, and so on may be implemented by processor 1001.

Furthermore, processor 1001 reads programs (program codes), software modules, data, and so on from at least one of storage 1003 and communication apparatus 1004, into memory 1002, and performs various processes according to these. As for the programs, programs to allow computers to perform at least part of the operations of the above-described embodiments are used. For example, control section 203 of device 20 may be implemented by control programs that are stored in memory 1002 and that operate on processor 1001, and other functional blocks may be implemented likewise. The various processes have been described to be performed by single processor 1001. However, the processes may be performed by two or more processors 1001 simultaneously or sequentially. Processor 1001 may be implemented by one or more chips. It should be noted that the program may be transmitted from a network via a telecommunication line.

Memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. Memory 1002 may be referred to as a "register," a "cache," a "main memory (primary storage apparatus)" and so on. Memory 1002 can store executable programs (program codes), software modules, and the like for implementing the radio communication method according to one embodiment of the present disclosure.

Storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. Storage 1003 may be referred to as "auxiliary storage apparatus." The above recording medium may be a database including memory 1002 and/or storage 1003, a server, or any other appropriate medium.

Communication apparatus 1004 is hardware (transmitting/receiving device) for allowing inter-computer communication via at least one of wired and wireless networks, and may be referred to as, for example, a "network device," a "network controller," a "network card," a "communication module," and so on. Communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmission section 101, reception section 102, reception section 201, transmission section 202, and the like, may be realized by communication apparatus 1004.

Input apparatus 1005 is an input device that receives input from the outside (for example, a keyboard, a mouse, a microphone, a switch, a button, a sensor, and so on). Output apparatus 1006 is an output device that allows sending output to the outside (for example, a display, a speaker, a Light Emitting Diode (LED) lamp, and so on). Note that input apparatus 1005 and output apparatus 1006 may be provided in an integrated structure (for example, a touch screen).

Furthermore, these types of apparatus, including processor 1001, memory 1002, and others, are connected by bus 1007 for communicating information. Bus 1007 may be formed with a single bus, or may be formed with buses that vary between pieces of apparatus.

Also, base station 10 and devices 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### <Notification and Signaling of Information>

Notification of information is by no means limited to the embodiments described in the present disclosure, and other methods may be used as well. For example, indication of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

### <Application System>

The embodiments illustrated in the present disclosure may be applied to Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New Radio (NR), New radio access (NX), Future generation radio access (FX), W-CDMA (registered trademark), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

### <Processing Procedure and the like>

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

### <Operation of Base Station>

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these. According to the above, a case is described in which there is a single network node other than the base station. However, a combination of multiple other network nodes may be considered (e.g., MME and S-GW).

### <Direction of Input and Output>

The information or signals described in this disclosure may be output from a higher layer (or lower layer) to a lower layer (or higher layer). The information or signals may be input or output through multiple network nodes.

### <Handling of Input and Output Information and the like>

The input or output information may be stored in a specific location (e.g., memory) or managed using management tables. The input or output information may be overwritten, updated, or added. The information that has been output may be deleted. The information that has been input may be transmitted to another apparatus.

### <Determination Method>

A decision or a determination may be realized by a value (0 or 1) represented by one bit, by a boolean value (true or false), or by comparison of numerical values (e.g., comparison with a predetermined values).

### <Variations and the like of Aspects>

Each aspect/embodiment described in the present disclosure may be used independently, may be used in combination, or may be used by switching according to operations. Further, indication (transmission/reporting) of predetermined information (e.g., indication (transmission/reporting) of "X") is not limited to an explicit indication (transmission/reporting), and may be performed by an implicit indication (transmission/reporting) (e.g., by not performing indication (transmission/reporting) of the predetermined information).

As described above, the present invention has been described in detail. It is apparent to a person skilled in the art that the present disclosure is not limited to one or more embodiments of the present disclosure described in the present specification. Modifications, alternatives, replacements, etc., of the present disclosure may be possible without departing from the subject matter and the scope of the present disclosure defined by the descriptions of claims. Therefore, the descriptions of the present specification are for illustrative purposes only, and are not intended to be limitations to the present disclosure.

### <Software>

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

### <Information and Signals>

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

### <System and Network>

As used in the present disclosure, the terms "system" and "network" are used interchangeably.

### <Names of Parameters and Channels>

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

### <Base Station>

In the present disclosure, the terms such as a "base station (BS)," a "radio base station," a "fixed station," a "NodeB," an "eNB (eNodeB)," a "gNB (gNodeB)," an "access point," a "transmission point," a "reception point," a "transmission/reception point," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be referred to as instructing the terminal to perform any control and/or operation based on the information by the base station.

### <Mobile Station>

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

### <Base Station/Mobile Station>

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on. The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a terminal. For example, an embodiment of the present disclosure may be applied to the structure that replaces a communication between a base station and a terminal with a communication between a plurality of terminals (for example, which may be referred to as "Device-to-Device (D2D)," "Vehicle-to-Everything (V2X)," and the like). In this case, device 20 may have the functions of base station 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the terminal in the present disclosure may be interpreted as base station. In this case, base station 10 may have the functions of device 20 described above.

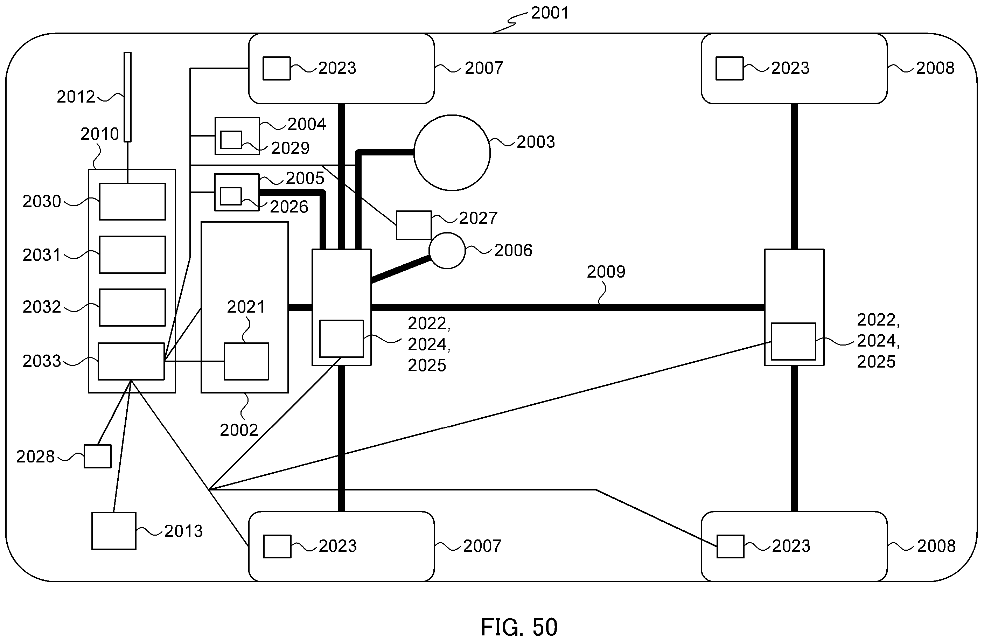

FIG. 50 illustrates an example of a configuration of vehicle 2001. As illustrated in FIG. 50, vehicle 2001 includes drive section 2002, steering section 2003, accelerator pedal 2004, brake pedal 2005, shift lever 2006, front wheel 2007, rear wheel 2008, axle 2009, electronic control section 2010, various sensors 2021 to 2029, information service section 2012, and communication module 2013. The aspects/embodiments described in the present disclosure may be applied to a communication device mounted in vehicle 2001, and may be applied to, for example, communication module 2013.

Drive section 2002 may include, for example, an engine, a motor, and a hybrid of an engine and a motor. Steering section 2003 includes at least a steering wheel and is configured to steer at least one of the front wheel or the rear wheel, based on the operation of the steering wheel operated by the user.

Electronic control section 2010 includes microprocessor 2031, memory (ROM, RAM) 2032, and communication port (IO port) 2033. Electronic control section 2010 receives signals from the various sensors 2021 to 2029 provided in vehicle 2001. Electronic control section 2010 may be referred to as an ECU (Electronic control unit).

Signals from various sensors 2021 to 2029 include a current signal from current sensor 2021 which senses the current of the motor, a front or rear wheel rotation signal acquired by revolution sensor 2022, a front or rear wheel pneumatic signal acquired by pneumatic sensor 2023, a vehicle speed signal acquired by vehicle speed sensor 2024, an acceleration signal acquired by acceleration sensor 2025, a stepped-on accelerator pedal signal acquired by accelerator pedal sensor 2029, a stepped-on brake pedal signal acquired by brake pedal sensor 2026, an operation signal of a shift lever acquired by shift lever sensor 2027, and a detection signal, acquired by object detection sensor 2028, for detecting an obstacle, a vehicle, a pedestrian, and the like.

Information service section 2012 includes various devices for providing (outputting) various kinds of information such as driving information, traffic information, and entertainment information, including a car navigation system, an audio system, a speaker, a television, and a radio, and one or more ECUs controlling these devices. The information service section 2012 provides various types of multimedia information and multimedia services to the occupants of the vehicle 2001 by using information obtained from the external device through the communication module 2013 or the like.

Information service section 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

Driving support system section 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, driving support system section 2030 transmits and receives various types of information via communication module 2013 to realize a driving support function or an autonomous driving function.

Communication module 2013 may communicate with microprocessor 2031 and components of vehicle 2001 via a communication port. For example, communication module 2013 transmits and receives data via communication port 2033, to and from drive section 2002, steering section 2003, accelerator pedal 2004, brake pedal 2005, shift lever 2006, front wheel 2007, rear wheel 2008, axle 2009, microprocessor 2031 and memory (ROM, RAM) 2032 in electronic control section 2010, and sensors 2021 to 29 provided in vehicle 2001.

Communication module 2013 is a communication device that can be controlled by microprocessor 2031 of electronic control section 2010 and that is capable of communicating with external devices. For example, various kinds of information are transmitted to and received from external devices through radio communication. Communication module 2013 may be internal to or external to electronic control section 2010. The external devices may include, for example, a base station, a mobile station, or the like.

Communication module 2013 may transmit at least one of signals from various sensors 2021 to 2029 described above input to electronic control section 2010, information obtained based on the signals, and information based on an input from the outside (a user) obtained via information service section 2012, to the external apparatus via radio communication. Electronic control section 2010, various sensors 2021 to 2029, information service section 2012, and the like may be referred to as input units that receive input. For example, the PUSCH transmitted by communication module 2013 may include information based on the input.

Communication module 2013 receives various types of information (traffic information, signal information, inter-vehicle information, etc.) transmitted from the external devices and displays the received information on information service section 2012 provided in vehicle 2001. Information service section 2012 may be referred to as an output unit that outputs information (for example, outputs information to devices, such as a display and a speaker, based on the PDSCH received by communication module 2013 (or data/information decoded from the PDSCH)).

In addition, communication module 2013 stores the various types of information received from the external devices in memory 2032 available to microprocessor 2031. Based on the information stored in memory 2032, microprocessor 2031 may control drive section 2002, steering section 2003, accelerator pedal 2004, brake pedal 2005, shift lever 2006, front wheel 2007, rear wheel 2008, axle 2009, and sensors 2021 to 2029 mounted in vehicle 2001.

### <Meaning and Interpretation of Terms>

As used herein, the term "determining" may encompass a wide variety of actions. For example, "determining" may be regarded as judging, calculating, computing, processing, deriving, investigating, looking up or search inquiry (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Also, "determining" may be replaced with "assuming," "expecting," "considering," and the like.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access." As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

### <Reference Signal>

A reference signal may be abbreviated as an "RS," and may be referred to as a "pilot" and so on, depending on which standard applies.

### <Meaning of "Based On">

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

### <"First" and "Second">

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

### <Means>

"Means" included in the configuration of each of the above apparatuses may be replaced by "parts," "circuits," "devices," etc.

### <Open Form>

In the case where the terms "include," "including" and variations thereof are used in the present disclosure, these terms are intended to be comprehensive in the same way as the term "comprising." Further, the term "or" used in the present specification is not intended to be an "exclusive or."

### <Time Units such as TTI, Frequency Units such as RB, and Radio Frame Configuration>

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a "Transmission Time Interval (TTI)," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP."

The above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

### <Maximum Transmit Power>

The "maximum transmit power" described in the present disclosure may mean a maximum value of the transmit power, the nominal UE maximum transmit power, or the rated UE maximum transmit power.

### <Article>

In the present disclosure, where an article is added by translation, for example "a," "an," and "the," the disclosure may include that the noun following these articles is plural.

### <"Different">

In this disclosure, the term "A and B are different" may mean "A and B are different from each other." It should be noted that the term "A and B are different" may mean "A and B are different from C." Terms such as "separated" or "combined" may be interpreted in the same way as the above-described "different."

### Industrial Applicability

An aspect of the present disclosure is useful for radio communication systems.

### Reference Signs List

10 Base station
20 Device
101, 202 Transmission section
102, 201 Reception section
103, 203 Control section

## Claims

1. A device having a lower complexity than a Narrow Band-Internet of Things (NB-IoT) device, the device comprising:
a reception section that receives information after the device wakes up; and
a control section that, when the information is received, determines transmission of a signal based on a predetermined probability.

2. The device according to claim 1, wherein
the control section determines the transmission of the signal by using an identical probability each time the information is received.

3. The device according to claim 1, wherein
the control section configures a probability of determining the transmission of the signal for a second and subsequent receptions of the information to be higher than a probability of determining the transmission of the signal for a first reception of the information.

4. The device according to claim 1, wherein
the control section increases a probability of transmitting the signal each time the information is received.

5. The device according to claim 1, wherein
the control section determines the transmission of the signal based on a number randomly selected from a predetermined range of numbers.

6. A communication method for a device having a lower complexity than a Narrow Band-Internet of Things (NB-IoT) device, the communication method comprising:
receiving information after the device wakes up; and
determining transmission of a signal based on a predetermined probability when the information is received.
